# EUROPÄISCHE PATENTSCHRIFT

(11) **EP 4 612 030 B1**
(45) Veröffentlichungstag und Bekanntmachung des Hinweises auf die Patenterteilung: **09.12.2026**
(21) Anmeldenummer: 23798351.5
(22) Anmeldetag: 24.10.2023
(51) Int. Cl.: B60T 13/68, B60T 13/66, B60T 17/22

(54) **ELEKTRO-PNEUMATISCHE BAUEINHEIT UND ELEKTRO-PNEUMATISCHE BREMSEINRICHTUNG MIT DOPPELTER REDUNDANZ UND BREMSSCHLUPFREGELUNG**
ELECTRO-PNEUMATIC UNIT AND ELECTRO-PNEUMATIC BRAKE DEVICE WITH DOUBLE REDUNDANCY AND BRAKE SLIP CONTROL
UNITÉ ÉLECTRO-PNEUMATIQUE ET DISPOSITIF DE FREINAGE ÉLECTRO-PNEUMATIQUE À DOUBLE REDONDANCE ET CONTRÔLE DU PATINAGE DES FREINAGES

(30) Priorität: 02.11.2022 DE 102022128947
(43) Veröffentlichungstag der Anmeldung: 10.09.2025
(73) Patentinhaber: KNORR-BREMSE Systeme für Nutzfahrzeuge GmbH, 80809 München (DE)
(72) Erfinder: MICHALSKI, Max, 85579 Neubiberg (DE)
(86) Internationale Anmeldenummer: PCT/EP2023/079551
(87) Internationale Veröffentlichungsnummer: WO 2024/094471

(56) Entgegenhaltungen:
- WO-A1-2019/092150
- WO-A1-2019/206565
- DE-A1- 102014 006 613
- DE-A1- 102016 010 461
- US-A1- 2005 165 531
- US-A1- 2022 340 115

## Beschreibung

Die vorliegende Erfindung betrifft eine elektro-pneumatische Baueinheit gemäß Anspruch 1, eine elektro-pneumatische Bremseinrichtung gemäß Anspruch 11 sowie ein Kraftfahrzeug gemäß Anspruch 26.

Beim _{"}Manuellen Fahren" bedient der Fahrer das Kraftfahrzeug in Bezug auf dessen Längs- und Querführung. Auch wenn durch Fahrerassistenzsysteme, die Längs- und Querführung unterstützt bzw. teilweise auch übernommen werden kann, bleibt der Fahrer für das Kraftfahrzeug verantwortlich und ihm obliegt die Überwachung aller wesentlichen Betriebsfunktionen.

Im Rahmen eines Betriebsmodus "teilautomatisiertes Fahren" sind Fahrerassistenzsysteme bekannt, die beispielsweise den Fahrer vor Kollisionen warnen und gegebenenfalls auch durch Eingriffe versuchen, Kollisionen zu vermeiden. Beispiele solcher Fahrerassistenzsysteme sind ein Notbremsassistent, ein Spur-Halte-Assistent, ein Toter-Winkel-Assistent, ein Einparkassistent und eine sogenannte Automatic Cruise Control (ACC), insbesondere für Autobahnfahrten.

Beim "hochautomatisierten Fahren" findet dagegen ein zumindest zeitweiser Übergang der Verantwortung an eine Regelungstechnik statt. Das System für die Fahrzeugführung ist dann ausgelegt, dass es zumindest für eine bestimmte Zeit und beispielsweise in einer definierten Umgebung (z.B. auf Autobahnen) die Führung des Fahrzeugs komplett übernehmen kann. Der Fahrer ist dann auch nicht mehr zur Überwachung der Regelfunktionen verpflichtet. Da dann aber immer noch kritische Situationen entstehen können (z. B. Ausfall der Sensorik, unübersichtliche Verkehrssituationen, etc.) kann das System die Führungsverantwortung auch an den Fahrer zurückgeben. Damit dies geschehen kann, muss gewährleistet sein, dass der Fahrer in einem Zeitfenster von einigen Sekunden die Führung des Kraftfahrzeugs wieder übernehmen kann. Der Betriebsmodus "hochautomatisiertes Fahren" zeichnet sich also dadurch aus, dass der Fahrer die Führung des Kraftfahrzeugs zumindest für einen definierten Zeitraum und in festgelegten Situationen nicht kontinuierlich überwachen muss. Der Fahrer muss jedoch in der Lage bleiben, die Führung des Kraftfahrzeugs in angemessener Zeit wieder übernehmen zu können. Der Betriebsmodus "hochautomatisiertes Fahren" kann von den Betriebsmodi "manuelles Fahren" und "teilautomatisiertes Fahren" auch dadurch unterschieden werden, dass das Fahrzeug im Betriebsmodus "hochautomatisiertes Fahren" eine über ein Navigationssystem eingegebene Fahrstrecke vollautomatisch fährt, wobei das Fahrzeug über ein elektronisches System automatisch beschleunigt, gebremst und gelenkt wird.

Hochautomatisiertes Fahren (HAD Highly Autonomous Driving) setzt also die Kenntnis des Umfeldes des Fahrzeugs voraus. Dazu wird das Umfeld mit einem oder mit mehreren Sensoren wie Radar, Lidar, Kamera, Ultraschallsensoren oder ähnlichen aus dem Stand der Technik bekannten Sensoren abgetastet bzw. aufgenommen. Mit Hilfe der Sensormessungen wird mithilfe ebenfalls im Stand der Technik bekannter Signalverarbeitungsverfahren dann die Belegung des Umfeldes durch Objekte erkannt. Die Belegung zeigt an, dass das Umfeld in einem bestimmten Abschnitt nicht durch das Fahrzeug befahren werden kann und gibt damit die Position des Objektes an. Zusätzlich wird der Typ bzw. die Art der Objekte erkannt, also ob es sich um Fußgänger, Fahrzeuge, Fahrbahnbegrenzungen, Ampeln etc. handelt. Mit Hilfe der erkannten Belegungen und der Typen der Objekte wird ein Umfeldmodell erstellt, das Informationen bzw. Daten zur Belegung des Umfeldes durch Objekte, also insbesondere die Abschnitte des Umfeldes, die von Objekten belegt sind, und den Typ der Objekte bereitstellt.

Nach Definition der SAE (Society of Automotive Engineers) J3016 sind die Automatisierungsgrade beim Fahren in 5 Stufen zusammengefasst. Die Bezeichnung "System" steht dabei entweder für ein Fahrerassistenzsystem, eine Kombination von einzelnen Fahrerassistenzsystemen oder ein vollständig autonomes Antriebs-, Brems- und Lenksystem. Der Grad der Automatisierung wird zunehmend umfassender, es beginnt mit Systemen die den Fahrer informieren oder warnen (Level 0), geht weiter über Systeme die entweder nur die Längs- oder Querführung des Fahrzeugs übernehmen, wobei der Fahrer stets die Verantwortung hat die Umgebung zu beobachten bzw. als Rückfalllösung einzuspringen (Level 1). Eine noch umfassendere Automatisierung stellen Level 2-Systeme zur Verfügung, die bereits die Längs- und Querführung des Fahrzeugs übernehmen, die Beobachtung der Umgebung und die Rückfallebene weiterhin beim Fahrer verbleibt (Level 2).

Systeme von Level 3 führen das Fahrzeug automatisiert ohne dass der Fahrer die Umgebung beobachten, er jedoch weiterhin als Rückfallebene fungieren muss. Im Level 4 ist bereits das System voll für die Fahrzeugführung verantwortlich und muss bei Ausfall entsprechende systembedingte Rückfalllösungen bereitstellen. Level 5 unterscheidet sich nur von 4 dadurch, dass die automatisierte Fahrzeugführung unter allen Bedingungen funktionieren muss, bei Level 4 beschränkt sich dies auf ausgewählte Situationen.

Kraftfahrzeuge mit hochautomatisierten Fahrfunktionen, die dem Fahrer die Führungsaufgabe und -verantwortung mindestens für eine begrenzte Zeit abnehmen, müssen bei Auftreten eines beliebigen Fehlers die Fahrzeugführung solange fortsetzen, bis der Fahrer die Verantwortung wieder übernimmt. Die daraus abgeleitete Systemeigenschaft "Fail-Safe" erfordert, dass Grundfunktionen wie Bremsen und Lenken weiterhin gewährleistet sind, bestenfalls ohne funktionale Einschränkungen. Dies bedeutet das beispielsweise, dass bei einem beliebigen Fehler das Fahrzeug zumindest innerhalb eines gewissen Rahmens weiterhin elektronisch gesteuert gebremst und gelenkt werden können muss.

In DE 10 2013 020 177 A1 sind für einen wenigstens teilautonomen Betrieb eines Kraftfahrzeugs ein Sensorsystem zur Erzeugung von Umgebungsinformationen, eine Hauptsteuerungseinheit und eine Ersatzsteuerungseinheit vorgesehen, wobei in einem nominellen Betriebszustand die Hauptsteuerungseinheit und bei einem Ausfall der Hauptsteuerungseinheit die Ersatzsteuerungseinheit die Ansteuerung der Sensorsysteme übernimmt.

DE 10 2016 010 461 A1 offenbart eine elektro-pneumatische Baueinheit, welche ausgebildet und eingerichtet ist, um in wenigstens zwei Redundanzen für eine elektro-pneumatische Betriebsbremseinrichtung einer elektro-pneumatischen Bremseinrichtung eines zum Ziehen eines Anhängers ausgebildeten Kraftfahrzeugs, einer ersten Redundanz und einer zweiten Redundanz, die elektro-pneumatische Bremseinrichtung zu steuern, wenn ein Normalbetrieb der elektro-pneumatischen Betriebsbremseinrichtung nicht möglich ist, bei welchem durch die elektro-pneumatische Betriebsbremseinrichtung ein primärer Betriebsbremsdruck erzeugt wird, wobei die elektro-pneumatische Baueinheit wenigstens Folgendes umfasst: Wenigstens einen ersten elektrischen Baueinheit-Eingangsanschluss zum Einsteuern eines elektrischen Betriebsbremsanforderungssignals, wenigstens einen ersten pneumatischen Baueinheit-Ausgangsanschluss zum Aussteuern eines pneumatischen Redundanz-Betriebsbremsdrucks an wenigstens einen pneumatischen Betriebsbremszylinder, wenigstens ein integriertes, wenigstens von dem am ersten elektrischen Baueinheit-Eingangsanschluss eingesteuerten elektrischen Betriebsbremsanforderungssignal gesteuertes elektronisches Steuergerät, eine von dem integrierten elektronischen Steuergerät gesteuerte erste Baueinheit-Einrichtung, welche wenigstens an den ersten pneumatischen Baueinheit-Ausgangsanschluss angeschlossen ist, eine von dem elektronischen Steuergerät gesteuerte zweite Baueinheit-Einrichtung, welche wenigstens ein Magnetventil umfasst und welche an den zweiten Baueinheit-Ausgangsanschluss angeschlossen ist.

Die Aufgabe der vorliegenden Erfindung liegt darin, eine elektro-pneumatische Baueinheit, eine elektro-pneumatische Bremseinrichtung sowie ein Kraftfahrzeug zur Verfügung zu stellen, bei welchen eine höhere Sicherheit der Bremsfunktionen gewährleistet ist.

Diese Aufgabe wird durch die in den Patentansprüchen 1, 11 und 26 gekennzeichneten Vorrichtungen gelöst.

Weitere vorteilhafte Ausgestaltungen und Weiterbildungen der Erfindung ergeben sich aus den abhängigen Ansprüchen.

### Offenbarung der Erfindung

Die Erfindung offenbart gemäß einem ersten Aspekt eine elektro-pneumatische Baueinheit, welche wenigstens ausgebildet und eingerichtet ist, um in wenigstens zwei Redundanzen für eine elektro-pneumatische Betriebsbremseinrichtung einer elektro-pneumatischen Bremseinrichtung eines zum Ziehen eines Anhängers ausgebildeten Kraftfahrzeugs, einer ersten (elektrischen) Redundanz und einer zweiten (elektrischen) Redundanz, die elektro-pneumatische Bremseinrichtung zu steuern, wenn ein Normalbetrieb der elektro-pneumatischen Betriebsbremseinrichtung nicht möglich ist, bei welchem durch die elektro-pneumatische Betriebsbrems einrichtung ein primärer Betriebsbremsdruck erzeugt wird, wobei die elektro-pneumatische Baueinheit wenigstens Folgendes beinhaltet:
a) Einen ersten elektrischen Baueinheit-Eingangsanschluss zum Einsteuern eines elektrischen Betriebsbremsanforderungssignals,
b) wenigstens einen ersten pneumatischen Baueinheit-Ausgangsanschluss zum Aussteuern eines pneumatischen Redundanz-Betriebsbremsdrucks an wenigstens einen pneumatischen Betriebsbremszylinder,
c) wenigstens einen zweiten pneumatischen Baueinheit-Ausgangsanschluss zum Aussteuern eines pneumatischen Bremsdrucks an wenigstens einen pneumatischen Federspeicherbremszylinder,
d) ein wenigstens von dem am ersten elektrischen Baueinheit-Eingangsanschluss eingesteuerten elektrischen Betriebsbremsanforderungssignal gesteuertes elektronisches Steuergerät,
e) eine von dem elektronischen Steuergerät gesteuerte erste Baueinheit-Einrichtung, welche wenigstens ein Magnetventil umfasst und welche wenigstens an den ersten pneumatischen Baueinheit-Ausgangsanschluss angeschlossen ist,
f) eine von dem elektronischen Steuergerät gesteuerte zweite Baueinheit-Einrichtung, welche wenigstens ein Magnetventil umfasst und welche an den zweiten Baueinheit-Ausgangsanschluss angeschlossen ist, wobei
g) das elektronische Steuergerät ausgebildet ist, um
   g1) im Rahmen der ersten Redundanz, wenn der Normalbetrieb der elektro-pneumatischen Betriebsbremseinrichtung nicht möglich ist, abhängig von dem am elektrischen Baueinheit-Eingangsanschluss eingesteuerten elektrischen Betriebsbremsanforderungssignal die erste Baueinheit-Einrichtung derart anzusteuern, dass an dem ersten Baueinheit-Ausgangsanschluss der Redundanz-Betriebsbremsdruck ausgesteuert wird, um den wenigstens einen Betriebsbremszylinder zuzuspannen, und um
   g2) im Rahmen der zweiten Redundanz, wenn der Normalbetrieb der elektro-pneumatischen Betriebsbremseinrichtung nicht möglich und auch die erste Redundanz ausgefallen ist, abhängig von dem an dem ersten elektrischen Baueinheit-Eingangsanschluss eingesteuerten elektrischen Betriebsbremsanforderungssignal die zweite Baueinheit-Einrichtung derart anzusteuern, dass an dem zweiten Baueinheit-Ausgangsanschluss der pneumatische Bremsdruck ausgesteuert wird, um den wenigstens einen Federspeicherbremszylinder zuzuspannen.

Unter einer elektro-pneumatischen Baueinheit soll eine Baueinheit mit elektrischen/elektronischen und pneumatischen Komponenten verstanden werden, wobei die Baueinheit ein eigenes Gehäuse aufweist oder auch mehrere aneinander geflanschte Gehäuse, in welchem bzw. in welchen dann die elektrischen/elektronischen und pneumatischen Komponenten der elektro-pneumatischen Baueinheit untergebracht sind.

Eine Baueinheit-Einrichtung stellt einen integralen Bestandteil der elektro-pneumatischen Baueinheit dar und kann elektrische/elektronische und/oder pneumatische Komponenten umfassen wie beispielsweise Magnetventile, pneumatische Ventile, Regelventile, Relaisventile sowie pneumatische und/oder elektrische Verbindungen. Beispielsweise sind einer Baueinheit-Einrichtung eine oder mehrere bestimmte Funktionen zugeordnet wie beispielsweise eine Druckluftaufbereitungsfunktion, eine Parkbremsfunktion, eine Betriebsbremsfunktion oder eine Anhängersteuerfunktion.

Unter dem "Normalbetrieb" der elektro-pneumatischen Betriebsbremseinrichtung soll verstanden werden, dass die elektro-pneumatische Betriebsbremseinrichtung einen dem elektrischen Bremsanforderungssignal entsprechenden Primär-Betriebsbremsdruck erzeugt. Dabei repräsentiert das elektrische Bremsanforderungssignal einen Soll-Primär-Betriebsbremsdruck.

Die elektro-pneumatische Betriebsbremseinrichtung ist bevorzugt ein EBS, d.h. ein elektronisch geregeltes Bremssystem, bei welchem ein Ist-Betriebsbremsdruck auf einen Soll-Bremsdruck eingeregelt wird.

Die elektro-pneumatische Baueinheit ist insbesondere eingerichtet und ausgebildet, um wenigstens im Normalbetrieb die Parkbremsbremsfunktion auszuführen, welche in einem Zuspannen und Lösen der Parkbremse bzw. des wenigstens einen Federspeicherbremszylinders und optional wenigstens eine weitere Parkbremsfunktion wie eine Testfunktion umfasst, welche darin besteht, ob das Gespann aus dem Kraftfahrzeug und angekoppeltem Anhänger durch die lediglich beim Kraftfahrzeug zugespannten Federspeicherbremszylinder im Stillstand gehalten werden kann. Der pneumatische Bremsdruck kann daher insbesondere ein pneumatischer Parkbremsdruck sein.

Andererseits stellt die elektro-pneumatische Baueinheit, welche beispielsweise gemäß einem weiteren Aspekt der Erfindung in der elektro-pneumatischen Bremseinrichtung zusätzlich zu der elektro-pneumatischen Betriebsbremseinrichtung vorgesehen ist, die Steuerung der elektro-pneumatischen Bremseinrichtung im Rahmen der ersten und zweiten Redundanz zur Verfügung. Folglich sind vorzugsweise sämtliche Steuerungsfunktionen der elektro-pneumatischen Bremseinrichtung für die erste und zweite Redundanz in der elektro-pneumatischen Baueinheit zusammengefasst. Vorteilhaft kann dann beispielsweise die elektro-pneumatische Baueinheit eine Nachrüstkomponente für eine bereits vorhandene elektro-pneumatische Bremseinrichtung bilden, um die erste und zweite Redundanz zur Verfügung zu stellen. Weiterhin werden durch die Integration verschiedener Komponenten und Systeme in einer Baueinheit Verkabelungen und deren Kontaktstellen eingespart.

Wesentlich ist auch, dass ein Betrieb des Kraftfahrzeugs sowohl in der ersten Redundanz wie auch in der zweiten Redundanz gegenüber dem Normalbetrieb mit einer unvermindert hohen Geschwindigkeit möglich ist, weil vorzugsweise wenigstens die ABS-Regelung bei der ersten und zweiten Redundanz erhalten bleibt. Zusätzlich können auch weitere Regelungen wie beispielsweise ein Fahrdynamikregelsystem (ESP) und/oder eine Antriebsschlupfregelung in der ersten Redundanz und optional auch in der zweiten Redundanz erhalten bleiben.

Im Rahmen der ersten Redundanz, wenn der Normalbetrieb der elektro-pneumatischen Betriebsbremseinrichtung nicht möglich ist, wird von der elektro-pneumatischen Baueinheit ein Redundanz-Betriebsbremsdruck als Ersatz für den Primär-Betriebsbremsdruck erzeugt, um den wenigstens einen Betriebsbremszylinder bei einer angeforderten Betriebsbremsung gemäß dem Betriebsbremsanforderungssignal zuzuspannen.

Im Rahmen der zweiten Redundanz, wenn sowohl der Normalbetrieb der elektro-pneumatischen Betriebsbremseinrichtung nicht möglich als auch die erste Redundanz ausgefallen ist, d.h., wenn auch kein Redundanz-Betriebsbremsdruck mehr erzeugt werden kann, dann wird von der elektro-pneumatischen Baueinheit ein pneumatischer Bremsbremsdruck ausgesteuert, um den wenigstens einen Federspeicherbremszylinder bei einer angeforderten Betriebsbremsung abhängig von dem Bremsanforderungssignal (dosiert) zuzuspannen. Anstatt mit dem wenigstens einen Betriebsbremszylinder wird daher in der zweiten Redundanz mit dem wenigstens einen Federspeicherbremszylinder die angeforderte Betriebsbremsung durchgeführt.

Die erste Redundanz und die zweite Redundanz bilden beide elektrische Redundanzen, weil sie jeweils von dem elektrischen Steuergerät der elektro-pneumatischen Baueinheit gesteuert sind.

Die in dem elektronischen Steuergerät der elektro-pneumatischen Baueinheit vorzugsweise implementierten Parkbremsfunktion(en) (wenigstens Zuspannen/Lösen der Parkbremse) sollen bevorzugt auch in der ersten und zweiten Redundanz zur Verfügung gestellt werden, wozu das elektronische Steuergerät der elektro-pneumatischen Baueinheit entsprechend ausgebildet ist.

Die in das elektronische Steuergerät der elektro-pneumatischen Baueinheit integrierte Parkbremssteuerung stellt daher vorteilhaft eine Doppelfunktion zur Verfügung, indem sie einerseits vorzugsweise im Normalbetrieb und vorzugsweise auch in der ersten Redundanz und in der zweiten Redundanz die Parkbremsfunktion(en) (wenigstens Zuspannen/Lösen der Parkbremse) zur Verfügung stellt, andererseits aber in der zweiten Redundanz auch eine Betriebsbremsung durch insbesondere dosiertes Zuspannen der Federspeicherbremszylinder abhängig von dem Betriebsbremsanforderungssignal ermöglicht. Je nach Höhe des von der elektro-pneumatischen Baueinheit ausgesteuerten pneumatischen Bremsdrucks, insbesondere pneumatischen Parkbremsdrucks können dann die Federspeicherbremszylinder graduell, gestuft oder stufenlos (dosiert) zugespannt werden, was den Komfort und die Sicherheit der Betriebsbremsung in der zweiten Redundanz erhöht, weil dann die Federspeicherbremszylinder nicht abrupt beispielsweise mit einer konstanten oder maximalen Parkbremskraft zugespannt werden.

In dem integrierten elektronischen Steuergerät sind folglich bevorzugt die Parkbremssteuerfunktion(en) sowie die redundante Betriebsbremssteuerfunktion für das Kraftfahrzeug und insbesondere für den Anhänger implementiert. Weiterhin können dort auch weitere Funktionen wie beispielsweise eine Druckluftaufbereitungsfunktion und eine Anhängerbremssteuerfunktion implementiert sein. Das integrierte elektronische Steuergerät kann auf wenigstens einer Steuerplatine Partitionen aufweisen, wobei jede Partition eine eigene Steuerfunktion (Parkbremsfunktion, Betriebsbremsfunktion, Druckluftaufbereitungsfunktion, Anhängerbremssteuerfunktion) ausführt.

Aus den oben genannten Gründen ergibt sich durch die elektro-pneumatische Baueinheit gemäß dem ersten Aspekt der Erfindung eine höhere Sicherheit für die Bremsfunktionen des Kraftfahrzeugs.

Gemäß einer Weiterbildung kann die elektro-pneumatische Baueinheit wenigstens einen zweiten elektrischen Baueinheit-Eingangsanschluss zum Einsteuern eines elektrischen Parkbremsanforderungssignals umfassen, wobei das elektronische Steuergerät ausgebildet ist, um im Rahmen einer Parkbremsfunktion abhängig von dem am zweiten elektrischen Baueinheit-Eingangsanschluss eingesteuerten elektrischen Parkbremsanforderungssignal die zweite Baueinheit-Einrichtung anzusteuern, um an dem zweiten Baueinheit-Ausgangsanschluss den pneumatischen Parkbremsdruck auszusteuern.

Um Fahrdynamikregelfunktionen wie ABS auch in der ersten Redundanz und in der zweiten Redundanz zur Verfügung zu stellen, kann die elektro-pneumatische Baueinheit wenigstens einen dritten elektrischen Baueinheit-Eingangsanschluss umfassen, welcher ausgebildet ist zum Einsteuern wenigstens eines elektrischen Signals in das integrierte elektronische Steuergerät, welches wenigstens eines der folgenden elektrischen Signale ist: ein raddrehzahlabhängiges Signal, welches eine Raddrehzahl wenigstens eines Rads des Kraftfahrzeugs und/oder des Anhängers repräsentiert, und/oder ein drehratenabhängiges Signal, welches eine Drehrate des Kraftfahrzeugs und/oder des Anhängers repräsentiert, und/oder ein lenkwinkelabhängiges Signal, welches einen Lenkwinkel oder Lenkradwinkel des Kraftfahrzeugs repräsentiert, und/oder ein längs- oder querbeschleunigungsabhängiges Signal, welches eine Längs- und/oder Querbeschleunigung des Kraftfahrzeugs und/oder des Anhängers repräsentiert.

Alternativ oder zusätzlich kann das elektrische Signal auch ein Signal sein, welches die Geschwindigkeit des Kraftfahrzeugs repräsentiert und beispielsweise von einem weiteren elektronischen Steuergerät des Kraftfahrzeugs stammt und von diesem an die elektro-pneumatische Baueinheit übermittelt wird, beispielsweise über einen Datenbus. Als elektrische Signale, welche die elektro-pneumatische Baueinheit empfangen und verarbeiten kann kommen daher jegliche Signale in Frage, welche einen Einfluss auf die Fahrdynamik und/oder Fahrstabilität des Kraftfahrzeugs und/oder des Anhängers haben.

Die elektro-pneumatische Baueinheit kann daher eingerichtet und ausgebildet sein, um wenigstens einige der elektrischen Signale zu verarbeiten, insbesondere im Sinne einer Fahrdynamik- und/oder Fahrstabilitätsregelung. Mit den oben angeführten elektrischen Signalen ist beispielsweise eine Fahrstabilitätsregelung (ESP) in der ersten Redundanz und optional auch in der zweiten Redundanz realisierbar.

Insbesondere werden Raddrehzahlsignale von mehreren Rädern, insbesondere von allen Rädern des Kraftfahrzeugs in das integrierte elektronische Steuergerät eingesteuert, um abhängig davon eine ABS-Bremsschlupfregelung in der ersten Redundanz und insbesondere auch in der zweiten Redundanz zu ermöglichen.

Damit wird ermöglicht, dass abhängig von wenigstens einem der oben angeführten elektrischen Signale das in der elektro-pneumatischen Baueinheit integrierte elektronische Steuergerät, welches mit dem dritten elektrischen Baueinheit-Eingangsanschluss verbunden ist, eine Fahrdynamikregelung ausgeführt wird, insbesondere eine ABS-Funktion und/oder eine Fahrstabilitätsregelung (ESP), die dann beispielsweise in dem integrierten elektronischen Steuergerät implementiert ist.

Beispielsweise kann die elektro-pneumatische Baueinheit wenigstens einen ersten elektrischen Baueinheit-Ausgangsanschluss für wenigstens ein ABS-Drucksteuerventil aufweisen. Wie bereits oben ausgeführt, kann in dem integrierten elektronischen Steuergerät insbesondere eine ABS-Regelung implementiert sein, welche ausgebildet ist, um wenigstens abhängig von dem am dritten elektrischen Baueinheit-Eingangsanschluss eingesteuerten elektrischen Signal an den ersten elektrischen Baueinheit-Ausgangsanschluss ein elektrisches Steuersignal, insbesondere ein ABS-Steuersignal für das ABS-Drucksteuerventil auszusteuern.

Vorzugsweise ist die elektro-pneumatische Baueinheit an einen CAN-Datenbus angeschlossen und über den CAN-Datenbus Signale und Daten mit anderen Steuergeräten, beispielsweise mit einem zentralen Bremssteuergerät austauschen, insbesondere im Hinblick auf eine Funktionsüberwachung des zentralen Bremssteuergeräts. Für die Datenbusfähigkeit kann die elektro-pneumatische Baueinheit eine Datenbusschnittstelle aufweisen. Auch können insbesondere einige oder sämtliche elektrische Baueinheit-Eingangsanschlüsse in einem gemeinsamen CAN-Anschluss der elektro-pneumatischen Baueinheit zusammengefasst sein.

Gemäß einer Weiterbildung kann das integrierte elektronische Steuergerät ausgebildet sein, dass wenigstens eine Regelung im Rahmen der ersten Redundanz und/oder im Rahmen der zweiten Redundanz der folgenden Regelungen ausgeführt wird:
- eine ABS-Regelung, und/oder
- eine ASR-Regelung, und/oder
- eine ESP-Regelung.

Beispielsweise kann das wenigstens eine ABS-Drucksteuerventil den von der elektro-pneumatischen Baueinheit ausgesteuerten Redundanz-Betriebsbremsdruck und/oder den von der elektro-pneumatischen Baueinheit im Rahmen der zweiten Redundanz ausgesteuerten Parkbremsdruck Senken, Halten oder Steigern, um den über die Raddrehzahlen erfassten Ist-Bremsschlupf an einen Soll-Bremsschlupf anzupassen.

Damit wird in der ersten Redundanz und in der zweiten Redundanz ein Funktionsverlust oder eine Degradation im Hinblick auf Fahrdynamikregelfunktionen vermieden, was ebenfalls zu einer höheren Funktionssicherheit beiträgt.

Gemäß einer bevorzugten Weiterbildung kann die elektro-pneumatische Baueinheit weiterhin eine dritte Baueinheit-Einrichtung mit wenigstens einem Magnetventil sowie einen an die dritte Baueinheit-Einrichtung angeschlossenen dritten pneumatischen Baueinheit-Ausgangsanschluss umfassen. Dabei kann das integrierte elektronische Steuergerät ausgebildet sein, um die dritte Baueinheit-Einrichtung abhängig von dem elektrischen Betriebsbremsanforderungssignal derart anzusteuern, dass an dem dritten pneumatischen Baueinheit-Ausgangsanschluss ein pneumatischer Anhängerbremsdruck für wenigstens einen Anhänger des Kraftfahrzeugs erzeugt wird. An den dritten pneumatischen Baueinheit-Ausgangsanschluss kann insbesondere ein Kupplungskopf "Bremse" für den Anhänger angeschlossen sein. In dem integrierten elektronischen Steuergerät sind dann Anhängersteuerfunktionen implementiert. Insbesondere können dann mit Hilfe der elektro-pneumatischen Baueinheit die Anhängerbremsen insbesondere in der ersten und zweiten Redundanz gesteuert werden.

Weiterhin bevorzugt umfasst die elektro-pneumatische Baueinheit eine vierte Baueinheit-Einrichtung mit Magnetventilen, die eine integrierte elektro-pneumatische Druckluftaufbereitungseinrichtung ausbildet. Das integrierte elektronische Steuergerät ist dann ausgebildet, um durch Ansteuerung der vierten Baueinheit-Einrichtung eine bekannte Druckluftaufbereitungsfunktionen auszuführen. Die vierte Baueinheit-Einrichtung kann dann insbesondere einen Druckregler, einen Lufttrockner und ein Mehrkreisschutzventil umfassen. Auch weist die elektro-pneumatische Baueinheit bevorzugt einen pneumatischen Baueinheit-Anschluss auf, insbesondere einen Kompressor-Anschluss auf, der zum Anschluss an einen Druckluftausgang eines Kompressors vorgesehen ist.

Die in der elektro-pneumatische Baueinheit integrierte vierte Baueinheit-Einrichtung versorgt dann wenigstens einen Druckluftvorrat mit Druckluft und weist hierzu wenigstens einen Baueinheit-Vorratsanschluss auf, an welchen dann der betreffende Druckluftvorrat angeschlossen ist.

Die elektro-pneumatische Bremseinrichtung ist hier beispielsweise wenigstens zweikreisig ausgeführt, wobei ein erster Kreis (beispielsweise ein Vorder- oder Hinterachs-Betriebsbremskreis) von einem ersten Vorratsdruck eines ersten Druckluftvorrats und ein zweiter Kreis von einem zweiten Vorratsdruck eines zweiten Druckluftvorrats druckluftversorgt ist. Ein Anhänger-Bremskreis kann dann von dem ersten Kreis oder dem zweiten Kreis oder von einem separaten Anhänger-Druckluftvorrat druckluftversorgt sein.

Gemäß einem weiteren Aspekt der Erfindung wird eine elektro-pneumatische Bremseinrichtung für ein Kraftfahrzeug offenbart, welches zum Ankoppeln eines Anhängers geeignet ist. Die elektro-pneumatische Bremseinrichtung umfasst wenigstens Folgendes:
a) die oben beschriebene elektro-pneumatische Baueinheit,
b) die elektro-pneumatische Betriebsbremseinrichtung (EBS), welche wenigstens Folgendes umfasst:
   b1) ein Primär-Betriebsbremssteuergerät,
   b2) wenigstens ein vom dem Primär-Betriebsbremssteuergerät elektrisch gesteuertes elektro-pneumatisches Druckregelmodul, und
   b3) den wenigstens einen Betriebsbremszylinder, der an einen pneumatischen Druckregelmodul-Ausgangsanschluss des Druckregelmoduls angeschlossen ist, wobei
   das Primär-Betriebsbremssteuergerät das Druckregelmodul abhängig von dem elektrischen Betriebsbremsanforderungssignal elektrisch steuert, um an dem Druckregelmodul-Ausgangsanschluss den Primär-Betriebsbremsdruck auszusteuern,

Ein solches elektro-pneumatisches Druckregelmodul ist aus dem Stand der Technik bekannt und umfasst ein integriertes lokales Steuergerät, welche eine an einen Druckluftvorrat angeschlossene Einlass-/Auslass-Magnetventilkombination gemäß einer in das lokale Steuergerät eingesteuerten Bremsanforderung steuert. Der auf der Basis des von dem Druckluftvorrat stammenden Vorratsdrucks von der Einlass-/Auslass-Magnetventilkombination erzeugte Steuerdruck steuert dann ein Vorratsseitig ebenfalls an den Druckluftvorrat angeschlossenes Relaisventil, welches dann aus dem Steuerdruck einen Bremsdruck für einen angeschlossenen Betriebsbremszylinder moduliert. Ein integrierter Drucksensor misst den Ist-Bremsdruck und meldet ihn an das integrierte Steuergerät, welches dann im Sinne einer Bremsdruckregelung den Ist-Bremsdruck an einen Soll-Bremsdruck angleicht, welcher der Bremsanforderung entspricht. Weiterhin ist in einem solchen Druckregelmodul auch ein Backup-Ventil als Magnetventil integriert, welches bei Bestromung schließt und verhindert, dass ein an einem Backup-Anschluss anstehender Backup-Druck, der insbesondere von einem pneumatischen Kanal eines Fußbremsventils stammt, an das Relaisventil weitergeleitet wird. Hingegen öffnet das Backup-Ventil bei einer Entstromung, welche auf einem Defekt des lokalen Steuergeräts, in der elektrischen Energieversorgung und/oder in der Ansteuerung durch das Bremsanforderungssignal basieren kann, und leitet dann den Backup-Druck an das Relaisventil weiter, welches dann abhängig von dem Backup-Druck den Betriebsbremsdruck moduliert. Durch den Backup-Druck wird dann eine rein pneumatische Redundanz realisiert, welche hier aber nur optional sein soll. Ein Druckregelmodul kann einkanalig, d.h. zur Regelung eines Bremsdrucks an einem Rad oder an einer Achse ausgebildet sein, sowie auch mehrkanalig, d.h. zur Regelung eines Bremsdrucks an mehreren Rädern beispielsweise an einer Achse ausgebildet sein.

Auch kann die elektro-pneumatische Bremseinrichtung eine elektro-pneumatische Parkbremseinrichtung aufweisen, welche den pneumatischen Federspeicherbremszylinder, der an den zweiten pneumatischen Baueinheit-Ausgangsanschluss angeschlossen ist, eine elektrische Parkbremsbetätigungseinrichtung, das integrierte elektronische Steuergerät und die zweite Baueinheit-Einrichtung umfasst, wobei das integrierte elektronische Steuergerät abhängig von dem von der elektrischen Parkbremsbetätigungseinrichtung erzeugten und in den zweiten elektrischen Baueinheit-Eingangsanschluss eingesteuerten elektrischen Parkbremsanforderungssignal die zweite Baueinheit-Einrichtung ansteuert, um an dem zweiten pneumatischen Baueinheit-Ausgangsanschluss den pneumatischen Bremsdruck, insbesondere einen pneumatischen Parkbremsdruck an wenigstens einen pneumatischen Federspeicherbremszylinder auszusteuern.

Weiterhin kann bei der elektro-pneumatischen Bremseinrichtung eine pneumatische Druckleitung zwischen einem Druckregelmodul-Backup-Anschluss des Druckregelmoduls und dem ersten pneumatischen Baueinheit-Ausgangsanschluss gezogen sein.

Weiterhin kann die elektro-pneumatische Bremseinrichtung wenigstens einen der folgenden Sensoren aufweisen: wenigstens einen Raddrehzahlsensor, welcher ausgebildet und eingerichtet ist, um raddrehzahlabhängige Signale zu erzeugen, und/oder wenigstens einen Drehratensensor, welcher ausgebildet und eingerichtet ist, um drehratenabhängige Signale zu erzeugen, und/oder wenigstens einen Lenkwinkelsensor, welcher ausgebildet und eingerichtet ist, um lenkwinkelabhängige Signale zu erzeugen, und/oder wenigstens einen Beschleunigungssensor, welcher ausgebildet und eingerichtet ist, um längs- und/oder querbeschleunigungsabhängige Signale zu erzeugen.

Auch kann in der elektro-pneumatischen Bremseinrichtung die elektro-pneumatische Baueinheit ausgebildet und eingerichtet sein, um die Signale des wenigstens einen Sensors an dem dritten elektrischen Baueinheit-Eingangsanschluss direkt zu empfangen und zu verarbeiten, wobei der wenigstens eine Raddrehzahlsensor an den dritten elektrischen Baueinheit-Eingangsanschluss der elektro-pneumatischen Baueinheit angeschlossen ist, und/oder der wenigstens eine Drehratensensor an den dritten elektrischen Baueinheit-Eingangsanschluss der elektro-pneumatischen Baueinheit angeschlossen ist, und/oder der wenigstens einen Lenkwinkelsensor an den dritten elektrischen Baueinheit-Eingangsanschluss der elektro-pneumatischen Baueinheit angeschlossen ist, und/oder der wenigstens eine Beschleunigungssensor an den dritten elektrischen Baueinheit-Eingangsanschluss der elektro-pneumatischen Baueinheit (GSAT) angeschlossen ist.

Alternativ kann in der elektro-pneumatischen Bremseinrichtung die elektro-pneumatische Baueinheit ausgebildet und eingerichtet sein, um die Signale des wenigstens einen Sensors zu verarbeiten und von einem weiteren elektronischen Steuergerät des Kraftfahrzeugs indirekt zu empfangen, insbesondere über einen Datenbus, an welchen die elektro-pneumatische Baueinheit und das weitere elektronische Steuergerät angeschlossen sind.

Auch kann bei der elektro-pneumatischen Bremseinrichtung eine pneumatische Druckleitung zwischen dem ersten pneumatischen Baueinheit-Ausgangsanschluss und einem Kupplungskopf "Bremse" vorgesehen ist.

Weiterhin kann die elektro-pneumatische Bremseinrichtung wenigstens ein dem Druckregelmodul-Ausgangsanschluss des Druckregelmoduls und dem pneumatischen Betriebsbremszylinder zwischengengeordnetes erstes ABS-Drucksteuerventil umfassen

Das erste ABS-Drucksteuerventil kann im Normalbetrieb von dem Primär-Betriebsbremssteuergerät abhängig von dem elektrischen Signal derart gesteuert sein, dass es den an dem Druckregelmodul-Ausgangsanschluss ausgesteuerten primären Betriebsbremsdruck im Sinne einer Bremsschlupfregelung anpasst, und im Rahmen der ersten Redundanz von dem integrierten elektronischen Steuergerät abhängig von dem elektrischen Signal derart gesteuert sein, dass es den Redundanz-Betriebsbremsdruck im Sinne einer Bremsschlupfregelung anpasst.

Auch kann in einer pneumatischen Druckleitung zwischen dem ersten Baueinheit-Ausgangsanschluss und einem pneumatischen Eingang des wenigstens einen elektro-pneumatischen Druckregelmoduls wenigstens ein zweites ABS-Drucksteuerventil angeordnet sein. Das zweite ABS-Drucksteuerventil kann dann im Rahmen der ersten Redundanz von dem integrierten elektronischen Steuergerät abhängig von dem elektrischen Signal derart gesteuert sein, dass es den Redundanz-Betriebsbremsdruck im Sinne einer Bremsschlupfregelung anpasst.

Das erste ABS-Drucksteuerventil und/oder das zweite ABS-Drucksteuerventil kann (können) elektrisch an den ersten elektrischen Baueinheit-Ausgangsanschluss angeschlossen sein.

Insbesondere kann an wenigstens einer Achse oder für wenigstens eine Achse des Kraftfahrzeugs ein einziges Drucksteuerventil vorgesehen sein und die Bremsschlupfregelung eine Select-Low-Regelung umfassen, bei welcher die Bremsschlupfregelung an dieser Achse gemäß dem Rad mit dem höheren Schlupf der beiden Räder der Achse durchgeführt wird.

Die ABS-Drucksteuerventile können von gleicher oder unterschiedlicher Bauart sein. Gemeinsam ist, dass sie zum Druckhalten, Drucksenken und Drucksteigern ausgebildet sind, um dadurch einen an dem betreffenden Rad oder den betreffenden Rädern auftretenden und detektierten Bremsschlupf zu regeln.

Auch können die elektro-pneumatische Baueinheit und insbesondere das integrierte elektronische Steuergerät der elektro-pneumatischen Baueinheit ausgebildet und eingerichtet sein, dass der im Rahmen der zweiten Redundanz an dem zweiten Baueinheit-Ausgangsanschluss ausgesteuerte pneumatische Bremsdruck im Sinne einer Bremsschlupfregelung moduliert wird. Hierzu können in dem integrierten elektronischen Steuergerät ABS-Routinen implementiert sein.

Das elektrische Betriebsbremsanforderungssignal kann von einem Fußbremsmodul und/oder von einer Autopiloteinrichtung erzeugt werden, durch welche ein wenigstens teilautonomes Fahren des Kraftfahrzeugs gesteuert wird.

Zur Realisierung des Fail-Safe-Verhaltens der elektro-pneumatischen Bremseinrichtung kann das integrierte elektronische Steuergerät der elektro-pneumatischen Baueinheit das Primär-Betriebsbremssteuergerät und/oder das wenigstens eine Druckregelmodul der elektro-pneumatischen Betriebsbremseinrichtung auf Fehler überwachen und bei einem festgestellten Fehler des Normalbetriebs der elektro-pneumatischen Betriebsbremseinrichtung die erste Redundanz und bei einem festgestellten Fehler der ersten Redundanz dann die zweite Redundanz aktivieren.

An den dritten pneumatischen Baueinheit-Ausgangsanschluss kann insbesondere ein Kupplungskopf "Bremse" für den Anhänger angeschlossen sein.

Bei der elektro-pneumatischen Bremseinrichtung kann eine erste elektrische Energiequelle vorgesehen sein, welche unabhängig von einer zweiten elektrischen Energiequelle ist. Dann können wenigstens das Primär-Betriebsbremssteuergerät und das wenigstens eine Druckregelmodul von der ersten elektrischen Energiequelle mit elektrischer Energie versorgt werden. Hingegen kann wenigstens die elektro-pneumatische Baueinheit und von der zweiten elektrischen Energiequelle mit elektrischer Energie versorgt werden. Wenigstens ein ABS-Drucksteuerventil von den ABS-Drucksteuerventilen kann entweder von der ersten elektrischen Energiequelle oder von der zweiten elektrischen Energiequelle oder auch von der ersten elektrischen Energiequelle und von der zweiten elektrischen Energiequelle mit elektrischem Strom versorgt werden. Auch dadurch erhöht sich die Funktionssicherheit der elektro-pneumatischen Bremseinrichtung.

Die Erfindung betrifft auch ein Kraftfahrzeug, insbesondere ein Zugfahrzeug, welches zum Ankoppeln wenigstens eines Anhängers ausgebildet ist, mit einer oben beschriebenen elektro-pneumatischen Bremseinrichtung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die Erfindung wird nun mit Bezug auf die begleitende Zeichnung anhand einer bevorzugten Ausführungsform beispielhaft erläutert. Es zeigen
- Fig. 1: eine schematische Darstellung einer elektro-pneumatischen Baueinheit GSAT gemäß einer bevorzugten Ausführungsform der Erfindung;
- Fig. 2: einen schematischen Schaltplan einer elektro-pneumatischen Bremseinrichtung gemäß einer bevorzugten Ausführungsform der Erfindung;
- Fig. 3: einen schematischen Schaltplan eines weiteren Teils der elektro-pneumatischen Bremseinrichtung von Fig. 2 mit der elektro-pneumatischen Baueinheit von Fig. 1 als Bestandteil;
- Fig. 4: einen schematischen Schaltplan eines weiteren Teils der elektro-pneumatischen Bremseinrichtung von Fig. 2 mit der elektro-pneumatischen Baueinheit von Fig. 1 als Bestandteil.

### Beschreibung des Ausführungsbeispiels

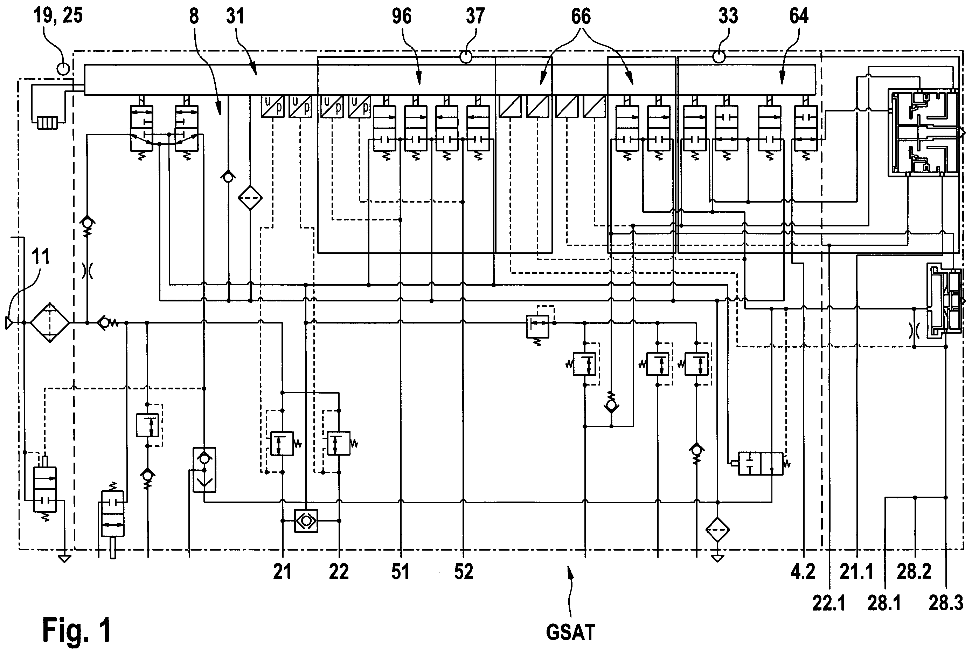

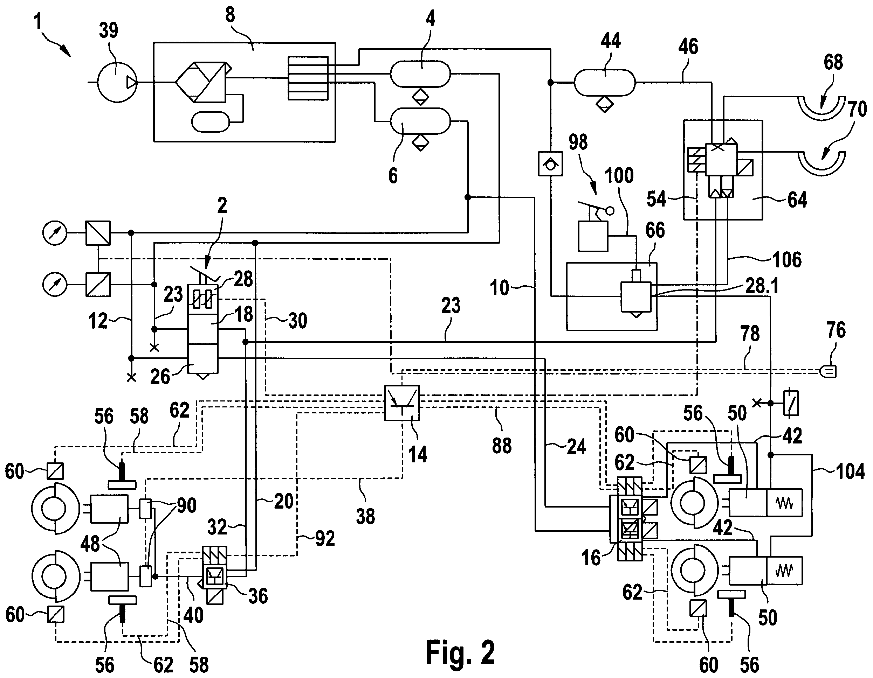

Fig. 1 zeigt eine schematische Darstellung einer elektro-pneumatischen Baueinheit GSAT gemäß einer bevorzugten Ausführungsform der Erfindung. Die elektro-pneumatische Baueinheit GSAT ist Bestandteil einer in Fig. 2 teilweise gezeigten elektro-pneumatischen Bremseinrichtung 1 eines Zugfahrzeugs und unter anderem ausgebildet und eingerichtet, um hier beispielsweise zwei Redundanzen für eine elektro-pneumatische Betriebsbremseinrichtung der elektro-pneumatischen Bremseinrichtung 1 zur Verfügung zu stellen, wenn ein Normalbetrieb der elektro-pneumatischen Betriebsbremseinrichtung 1 nicht möglich ist. Die elektro-pneumatische Baueinheit GSAT ist hier in der elektro-pneumatischen Bremseinrichtung 1 zusätzlich zu einem elektronisch geregelten Bremssystem (EBS) vorgesehen, das hier beispielsweise die elektro-pneumatische Betriebsbremseinrichtung bildet.

Die elektro-pneumatische Baueinheit GSAT umfasst hier beispielsweise ein in **Fig. 1** durch einen strichpunktierten Rahmen angedeutetes Gehäuse 17 mit einem ersten elektrischen Baueinheit-Eingangsanschluss 19 zum Einsteuern eines elektrischen Betriebsbremsanforderungssignals, einen zweiten elektrischen Baueinheit-Eingangsanschluss 25 zum Einsteuern eines elektrischen Parkbremsanforderungssignals, hier beispielsweise zwei erste pneumatischen Baueinheit-Ausgangsanschlüsse 51, 52 zum Aussteuern eines pneumatischen Redundanz-Betriebsbremsdrucks an pneumatische Betriebsbremszylinder 48, 50.

Weiterhin umfasst die elektro-pneumatische Baueinheit GSAT hier beispielsweise drei zweite pneumatische Baueinheit-Ausgangsanschlüsse 28.1, 28.2, 28.3 zum Aussteuern eines pneumatischen Parkbremsdrucks pneumatische Federspeicherbremszylinder 94. Die genannten Anschlüsse sind an dem Gehäuse 17 angeordnet bzw. ausgebildet. Die ersten und zweiten elektrischen Baueinheit-Eingangsanschlüsse 19, 25 können zusammen durch einen einzigen Datenbus-Anschluss ausgebildet sein, der dann zum Anschluss an einen CAN-BUS vorgesehen ist, über welchen das Betriebsbremsanforderungssignal und das Parkbremsanforderungssignal eingespeist und von dort in ein integriertes elektronisches Steuergerät 31 der elektro-pneumatischen Baueinheit GSAT eingesteuert werden. In dem elektronischen Steuergerät sind verschiedene Funktionen softwaremäßig implementiert, auf die später noch eingegangen wird.

Die elektro-pneumatische Baueinheit GSAT umfasst weiterhin eine von dem elektronischen Steuergerät gesteuerte erste Baueinheit-Einrichtung 96, welche beispielsweise mehrere Magnetventile umfasst und welche an die ersten pneumatischen Baueinheit-Ausgangsanschlüsse 51, 52 angeschlossen ist, sowie eine von dem elektronischen Steuergerät 31 gesteuerte zweite Baueinheit-Einrichtung 66, welche ebenfalls Magnetventile umfasst und welche an die zweiten Baueinheit-Ausgangsanschlüsse 28.1, 28.2, 28.3 angeschlossen ist.

Das elektronische Steuergerät 31 ist ausgebildet, um im Rahmen einer Parkbremsfunktion abhängig von dem am Datenbus-Anschluss 19, 25 eingesteuerten elektrischen Parkbremsanforderungssignal die zweite Baueinheit-Einrichtung 66 anzusteuern, um an den zweiten Baueinheit-Ausgangsanschlüssen 28.1, 28.2 und 28.3 einen pneumatischen Parkbremsdruck für die Federspeicherbremszylinder 94 auszusteuern.

In dem elektronischen Steuergerät 31 sind Routinen zur Ausbildung der ersten und zweiten Redundanz implementiert, um Komponenten und Elemente einer in den **Fig. 2** bis **Fig. 4** schematisch gezeigten elektro-pneumatischen Bremseinrichtung 1 im Sinne dieser ersten und zweiten Redundanz zu steuern.

**Fig. 2** zeigt einen schematischen Schaltplan eines Teils der elektro-pneumatischen Bremseinrichtung 1, welche eine elektro-pneumatische Betriebsbremseinrichtung und eine elektro-pneumatischen Parkbremseinrichtung umfasst. Diese elektro-pneumatische Betriebsbremseinrichtung ist hier vorzugsweise als elektronisch geregeltes Bremssystem (EBS) ausgeführt, welches in einem Normalbetrieb elektrisch gesteuert/geregelt ist. Die elektro-pneumatische Bremseinrichtung 1 ist hier für eine Zugfahrzeug-Anhängerkombination vorgesehen und ausgebildet, bestehend aus einem Zugfahrzeug und einem angekoppelten Anhänger.

Im elektrischen Normalbetrieb erzeugt das elektronisch geregelte Bremssystem (EBS) einen primären Betriebsbremsdruck und steuert diesen in pneumatische Betriebsbremszylinder 48, 50 der elektro-pneumatischen Bremseinrichtung 1 ein, um die durch das elektrische Betriebsbremsanforderungssignal vorgegebene Betriebsbremsanforderung umzusetzen. Dieser Betriebsbremsdruck ist "primär", weil er im vorrangigen elektrischen Normalbetrieb des elektronisch geregelten Bremssystems (EBS) erzeugt wird. In der weiter unten aufgeführten Beschreibung von Fig. 2 wird die Erzeugung dieses primären Betriebsbremsdrucks detaillierter erläutert.

Im elektrischen Normalbetrieb werden auch Fahrdynamikregelfunktionen wie beispielsweise eine ABS-Regelung innerhalb des elektronisch geregelten Bremssystems (EBS) durchgeführt. Falls Fehler oder Defekte in einer ersten elektrischen Energieversorgung, der Steuerung und/oder in elektrischen/elektronischen Komponenten des elektronisch geregelten Bremssystems (EBS) auftreten, dann können weder ein primärer Betriebsbremsdruck erzeugt noch die Fahrdynamikregelfunktionen wie die ABS-Regelung ausgeführt werden. Damit ist auch kein elektrischer Normalbetrieb mehr möglich.

Im Rahmen der ersten Redundanz, wenn der Normalbetrieb des elektronisch geregelten Bremssystems (EBS) nicht möglich ist, steuert das elektronische Steuergerät 31 abhängig von dem elektrischen Betriebsbremsanforderungssignal die erste Baueinheit-Einrichtung 96 derart an, dass an den ersten pneumatischen Baueinheit-Ausgangsanschlüssen 51, 52 ein Redundanz-Betriebsbremsdruck ausgesteuert wird, um die Betriebsbremszylinder 48, 50 zuzuspannen. Der Redundanz-Betriebsbremsdruck stellt dann einen Ersatz-Betriebsbremsdruck für den primären Betriebsbremsdruck dar.

Nun ist der Fall zwar unwahrscheinlich aber denkbar und möglich, dass auch die erste Redundanz nicht ausgeführt werden kann, weil beispielsweise die erste Baueinheit-Einrichtung 96 und/oder deren beispielsweise separate zweite elektrische Energieversorgung einen Fehler aufweist. Dann kommt die zweite Redundanz zum Tragen. In der zweiten Redundanz steuert das integrierte elektronische Steuergerät 31 abhängig von dem elektrischen Betriebsbremsanforderungssignal die zweite Baueinheit-Einrichtung 66 derart an, dass an den zweiten pneumatischen Baueinheit-Ausgangsanschlüssen 28.1, 28.2, 28.3 der pneumatische Parkbremsdruck ausgesteuert wird, um die Federspeicherbremszylinder 94 zuzuspannen.

Im Rahmen der zweiten Redundanz, wenn sowohl der Normalbetrieb des elektronisch geregelten Bremssystems (EBS) nicht möglich als auch die erste Redundanz ausgefallen ist, d.h., wenn auch kein Redundanz-Betriebsbremsdruck mehr erzeugt werden kann, dann wird folglich von der elektro-pneumatischen Baueinheit GSAT ein Parkbremsbremsdruck ausgesteuert, um die Federspeicherbremszylinder 94 bei einer angeforderten Betriebsbremsung abhängig von dem Bremsanforderungssignal (dosiert) zuzuspannen. Anstatt mit den Betriebsbremszylindern 48, 50 wird daher in der zweiten Redundanz mit den Federspeicherbremszylindern 94 die angeforderte Betriebsbremsung durchgeführt. Im Ausführungsbeispiel von **Fig.** 2 sind innerhalb der elektro-pneumatischen Bremseinrichtung lediglich an der Hinterachse Federspeicherbremszylinder 94 angeordnet. Zusätzlich können aber auch an der Vorderachse Federspeicherbremszylinder 94 angeordnet sein, die dann in der zweiten Redundanz ebenfalls zugespannt werden.

Die elektro-pneumatische Baueinheit GSAT ist weiterhin ausgebildet und eingerichtet, einerseits im Normalbetrieb und in den beiden Redundanzen die Parkbremsbremsfunktion auszuführen bzw. zu steuern, welche hier beispielsweise in einem Zuspannen und Lösen der Parkbremse bzw. im Entlüften und Lüften der Federspeicherbremszylinder 94 besteht. Hierzu ist die zweite Baueinheit-Einrichtung 66 in die elektro-pneumatische Baueinheit GSAT integriert und die Parkbremssteuerfunktionen sind in dem elektronischen Steuergerät 31 implementiert. Zur Ausführung der Parkbremssteuerfunktionen steuert dann das elektronische Steuergerät 31 die zweite Baueinheit-Einrichtung 66 an, um einen Parkbremsdruck zu erzeugen.

Andererseits ist die elektro-pneumatische Baueinheit GSAT ausgebildet und eingerichtet, das elektronisch geregelte Bremssystem (EBS) der elektro-pneumatischen Bremseinrichtung 1 im Rahmen der ersten und zweiten Redundanz zu steuern. Folglich sind hier vorzugsweise sämtliche Steuerungs- und Regelungsfunktionen der ersten und zweiten Redundanz in der elektro-pneumatischen Baueinheit GSAT zusammengefasst.

Weiterhin wird durch die elektro-pneumatische Baueinheit GSAT ermöglicht, dass eine Fahrt oder ein Betrieb des Zugfahrzeugs oder eines Gespanns aus dem Zugfahrzeug und wenigstens einem Anhänger sowohl in der ersten Redundanz wie auch in der zweiten Redundanz in Bezug zum Normalbetrieb mit einer unvermindert hohen Geschwindigkeit fortgesetzt werden kann, weil insbesondere eine ABS-Regelung innerhalb der ersten und zweiten Redundanz vorgesehen ist und deshalb keine Degradation der Schlupfregelung in der ersten und zweiten Redundanz stattfindet.

Zur Realisierung von Fahrdynamikregelfunktionen kann die elektro-pneumatische Baueinheit GSAT wenigstens einen dritten elektrischen Baueinheit-Eingangsanschluss 33 umfassen. Dieser dritte elektrische Baueinheit-Eingangsanschluss 33 ist dann ausgebildet zum Einsteuern wenigstens von Raddrehzahlsignalen von Raddrehzahlsensoren 56 in das integrierte elektronische Steuergerät 31. Zusätzlich kann der dritte elektrische Baueinheit-Eingangsanschluss 33 ausgebildet sein zum Einsteuern von Drehratensignalen in das integrierte elektronische Steuergerät 31, welche eine Drehrate des Zugfahrzeugs repräsentieren, und/oder zum Einsteuern von Lenkwinkelsignalen in das integrierte elektronische Steuergerät 31, welche einen Lenkwinkel oder Lenkradwinkel des Zugfahrzeugs repräsentieren. Auch können hierzu mehrere dritte elektrische Baueinheit-Eingangsanschlüsse 33 vorgesehen sein, wobei dann jeder dritte elektrische Baueinheit-Eingangsanschluss 33 einem der oben genannten Signale zugeordnet ist.

Insbesondere werden wenigstens die Raddrehzahlsignale von den Raddrehzahlsensoren 56 aller vier Räder des Zugfahrzeugs über den dritten elektrischen Baueinheit-Eingangsanschluss 33 in das integrierte elektronische Steuergerät 31 eingesteuert, um abhängig davon eine ABS-Bremsschlupfregelung in der ersten Redundanz und insbesondere auch in der zweiten Redundanz zu ermöglichen.

Damit wird ermöglicht, dass abhängig von den oben angeführten Signalen, insbesondere abhängig wenigstens von den Raddrehzahlsignalen das in der elektro-pneumatischen Baueinheit GSAT integrierte elektronische Steuergerät 31 eine Fahrdynamikregelung ausführen kann, insbesondere eine ABS-Funktion und/oder eine Antriebsschlupfregelung (ASR) und/oder eine Fahrstabilitätsfunktion (ESP), die dann beispielsweise in dem integrierten elektronischen Steuergerät 31 softwaremäßig implementiert ist.

Hierzu kann die elektro-pneumatische Baueinheit GSAT einen ersten elektrischen Baueinheit-Ausgangsanschluss 37 für in **Fig. 1** bis **Fig. 4** gezeigte ABS-Drucksteuerventile 90, 110 aufweisen, um abhängig von den am dritten elektrischen Baueinheit-Eingangsanschluss 33 eingesteuerten Signalen, insbesondere Raddrehzahlsignalen über den ersten elektrischen Baueinheit-Ausgangsanschluss 37 ABS-Steuersignale an die ABS-Drucksteuerventile 90, 110 auszusteuern.

Dann passen die ABS-Drucksteuerventile 90, 110 abhängig von den ABS-Steuersignalen den von der elektro-pneumatischen Baueinheit GSAT im Rahmen der ersten Redundanz ausgesteuerten Redundanz-Betriebsbremsdruck und vorzugsweise auch den im Rahmen der zweiten Redundanz ausgesteuerten Parkbremsdruck in Drucksenk-, Druckhalte- und Drucksteigerungsphasen an, um den über die Raddrehzahlen erfassten Ist-Bremsschlupf an einen Soll-Bremsschlupf anzupassen.

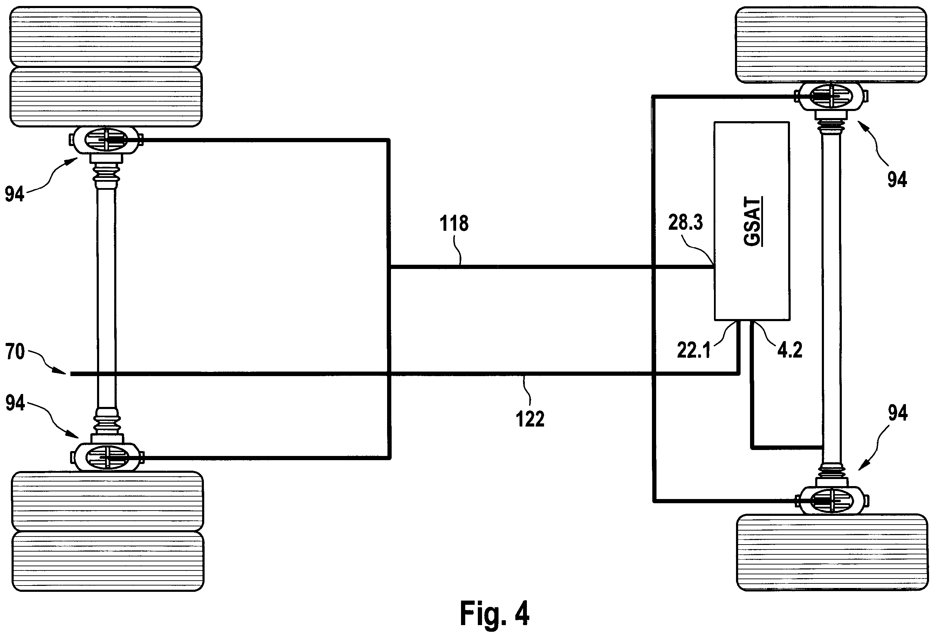

Gemäß der bevorzugten Ausführungsform umfasst die elektro-pneumatische Baueinheit GSAT weiterhin eine dritte Baueinheit-Einrichtung 64 mit Magnetventilen sowie an die dritte Baueinheit-Einrichtung 64 angeschlossene dritte pneumatische Baueinheit-Ausgangsanschlüsse 4.2, 22.1, 21.1. Dann ist das integrierte elektronische Steuergerät 31 ausgebildet, um die dritte Baueinheit-Einrichtung 64 abhängig von dem elektrischen Betriebsbremsanforderungssignal derart anzusteuern, dass an den dritten pneumatischen Baueinheit-Ausgangsanschlüssen 4.2, 21.1, 22.1 ein pneumatischer Anhängerbremsdruck für den Anhänger des Zugfahrzeugs erzeugt wird. An einen dritten pneumatischen Baueinheit-Ausgangsanschluss 22.1 kann insbesondere ein Kupplungskopf "Bremse" 70 für den Anhänger über eine Druckleitung angeschlossen sein (Figuren 1 und 4).

Daher sind in dem integrierten elektronische Steuergerät 31 Anhängersteuerroutinen zur Anhängersteuerung, insbesondere der Anhängerbremsen implementiert, die dann sowohl im Normalbetrieb als auch in der ersten und zweiten Redundanz wirksam sind. Folglich können dann mit Hilfe der elektro-pneumatischen Baueinheit GSAT auch die Anhängerbremsen in der ersten und zweiten Redundanz bei einer Betriebsbremsung zugespannt werden.

Weiterhin bevorzugt umfasst die elektro-pneumatische Baueinheit GSAT optional auch eine integrierte eine vierte Baueinheit-Einrichtung 8, welche ausgebildet und vorgesehen ist zur Ausführung von Druckluftaufbereitungsfunktionen wie Kreistrennung, Druckregelung und Lufttrocknung. Die vierte Baueinheit-Einrichtung 8 entspricht dann einer Druckluftaufbereitungseinrichtung, wobei die Druckluftaufbereitungssteuerroutinen in dem elektronischen Steuergerät 31 implementiert sind. Die vierte Baueinheit-Einrichtung 8 umfasst insbesondere Magnetventile. Das integrierte elektronischen Steuergerät 31 ist dann ausgebildet, um durch Ansteuerung der vierten Baueinheit-Einrichtung 8 die Druckluftaufbereitungsfunktionen auszuführen, wie beispielsweise eine Druckregelung und/oder eine Lufttrocknung. Die vierte Baueinheit-Einrichtung 8 kann dann insbesondere einen Druckregler, einen Lufttrockner und ein Mehrkreisschutzventil umfassen. Auch weist die elektro-pneumatische Baueinheit GSAT einen pneumatischen Baueinheit-Eingangsanschluss 11 auf, der zum Anschluss an einen Druckluftausgang eines Kompressors 39 **(****Fig. 2****)** vorgesehen ist und welcher dann mit der vierten Baueinheit-Einrichtung 8 verbunden ist.

Die in der elektro-pneumatische Baueinheit GSAT integrierte vierte Baueinheit-Einrichtung 8 versorgt als elektro-pneumatische Druckluftaufbereitungseinrichtung hier beispielsweise einen ersten Druckluftvorrat 6 für die Hinterachse und einen zweiten Druckluftvorrat 4 für die Vorderachse mit Druckluft und weist hierzu zwei Baueinheit-Vorratsanschlüsse 21, 22 auf, die mit der vierten Baueinheit-Einrichtung 8 verbunden sind. Dabei ist ein erster Baueinheit-Vorratsanschluss 21 vorgesehen, um mit dem ersten Druckluftvorrat 6 verbunden zu werden, und ein zweiter Baueinheit-Vorratsanschluss 22, um mit dem zweiten Druckluftvorrat 4 verbunden zu werden.

Die elektro-pneumatische Bremsenrichtung 1 ist daher hier beispielsweise zweikreisig ausgeführt, wobei ein erster Kreis beispielsweise einen Hinterachs-Bremskreis bildet, welcher vom ersten Vorratsdruck des ersten Druckluftvorrats 6 druckluftversorgt ist. Weiterhin sind als zweiter Kreis beispielsweise ein Vorderachs-Bremskreis sowie ein Anhänger-Bremskreis vorgesehen, welche hier beispielsweise vom zweiten Vorratsdruck des zweiten Druckluftvorrats 4 druckluftversorgt sind.

Im Folgenden wird anhand von **Fig. 2** der Aufbau und die Funktion der elektro-pneumatischen Bremseinrichtung 1 gemäß einer bevorzugten Ausführungsform erläutert, wobei wie oben bereits erwähnt deren elektro-pneumatische Betriebsbremseinrichtung hier vorzugsweise als elektronisch geregeltes Bremssystem (EBS) ausgeführt ist.

Um den Überblick und das Verständnis zu erleichtern, sind in **Fig. 2** auch die in Wirklichkeit in die elektro-pneumatische Baueinheit GSAT integrierten Baueinheit-Einrichtungen, nämlich die zweite Baueinheit-Einrichtung 66, die dritte Baueinheit-Einrichtung 64 und die vierte Baueinheit-Einrichtung 8 jeweils separat gezeigt. Pneumatische Verbindungen zwischen diesen Baueinheit-Einrichtungen 8, 64, 66 sind dann interne pneumatische Verbindungen innerhalb der elektro-pneumatischen Baueinheit GSAT.

Bei der hier bevorzugten Ausführung des elektronisch geregelten Bremssystem (EBS) ist an der Hinterachse ein 2-Kanal-Druckregelmodul 16 und an der Vorderachse ein 1-Kanal-Druckregelmodul 36 vorhanden, mit je Kanal einer integrierten Einlassventil-/Auslassventil-Kombination, einem Back-up-Ventil, einem Relaisventil sowie mit einem Drucksensor zur Erfassung des Ist-Bremsdrucks und mit einem lokalen elektronischen Steuergerät oder Bremsdruckregler zum Abgleich des Ist-Bremsdrucks mit einem Soll-Bremsdruck gemäß dem jeweils elektrisch eingesteuerten Bremsanforderungssignal. Das 2-Kanal-Druckregelmodul 16 regelt dann die Bremsdrücke für das rechte und linke Hinterrad getrennt und der 1-Kanal-Druckregelmodul 36 den Bremsdruck für das rechte und linke Vorderrad gemeinsam.

Der Aufbau und die Funktion solcher Druckregelmodule 16, 36 ist hinlänglich bekannt und soll deshalb hier nicht weiter erläutert werden.

Das elektronisch geregelte Bremssystem (EBS) des Zugfahrzeugs beinhaltet weiterhin eine Bremsschlupfregelung (ABS), deren ABS-Steuerroutinen bevorzugt in ein zentrales elektronisches EBS-Bremssteuergerät 14 integriert sind. Weiterhin sind hier beim elektronisch geregelten Bremssystem (EBS) vorzugsweise eine Antriebsschlupfregelung (ASR) sowie ein elektronisches Stabilitätsprogramm (ESP) vorhanden, wobei die diesbezüglichen Steuerroutinen ebenfalls in dem zentralen Bremssteuergerät 14 implementiert sind.

Gemäß dem in **Fig. 2** gezeigten Schaltschema der elektro-pneumatischen Bremseinrichtung 1 des Zugfahrzeugs ist beispielsweise ein Fußbremsmodul 2 mit hier einem Fußbremspedal als Betriebsbremsbetätigungsorgan 3 zur Erzeugung des Betriebsbremsanforderungssignals vorhanden. Das Betriebsbremsanforderungssignal kann jedoch auch von einer Steuereinrichtung erzeugt werden, die das Fahrzeug autonom steuert. Die Luftbeschaffung, Luftaufbereitung (Lufttrocknung) und die Absicherung wird hier ausgeführt durch die hier in der elektro-pneumatischen Baueinheit GSAT integrierte vierte Baueinheit-Einrichtung 8, welche eine Druckluftaufbereitungseinrichtung verkörpert.

Der erste Druckluftvorrat 6 für die Hinterachse ist über pneumatische Versorgungsleitungen 10, 12 einerseits mit einem Vorratsanschluss des 2-Kanal-Druckregelmoduls 16 für die Betriebsbremszylinder 50 der Hinterachse sowie mit einem Hinterachs-Kanal 26 des Fußbremsmoduls 2 verbunden. In analoger Weise ist der zweite Druckluftvorrat 4 über eine pneumatische Versorgungsleitung 20 mit einem Vorratsanschluss des den Bremszylindern 48 der Vorderräder zugeordneten 1-Kanal-Druckregelmoduls 36 sowie mit einem Vorderachs-Kanal 18 des Fußbremsmoduls 2 verbunden.

Das Fußbremsmodul 2 umfasst hier optional zwei pneumatische Kanäle 18, 26, welche abhängig von einer durch den Fuß des Fahrers auf das Fußbremspedal 3 vorgegebenen Bremsanforderung jeweils einen pneumatischen Back-up-Druck oder Steuerdruck an den Ausgängen der Kanäle 18, 26 erzeugen. Parallel hierzu sind in dem Fußbremsmodul 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem elektrischen Kanal 28 des Fußbremsmoduls 2 und dem zentralen elektronischen EBS-Bremssteuergerät 14 einsteuert, welches die beiden beispielsweise wegen der Lastverteilung unterschiedlichen Bremsanforderungssignale für die Vorderachse und die Hinterachse unterscheiden kann. Das elektrische Bremsanforderungssignal wird parallel auch in den ersten elektrischen Baueinheit-Eingangsanschluss 19 der elektro-pneumatischen Baueinheit GSAT eingesteuert (Fig. 1).

Weiterhin sind der Vorderachs-Kanal 18 und der Hinterachs-Kanal 26 des Fußbremsmoduls 2 jeweils über eine pneumatische erste und dritte Druckleitungen 24, 32 mit zugeordneten Back-up-Anschlüssen des 2-Kanal-Druckregelmoduls 16 bzw. des 1-Kanal-Druckregelmoduls 36 verbunden. Weiterhin führt jeweils eine pneumatische Bremsleitung 40, 42 von Arbeitsanschlüssen des 2-Kanal-Druckregelmoduls 16 bzw. des 1-Kanal-Druckregelmoduls 36 zu den radweisen pneumatischen Betriebsbremszylindern 48, 50 der Vorderachse bzw. der Hinterachse.

Drehzahlsensoren 56 melden die aktuelle Drehzahl der Räder des hier beispielsweise als Zweiachsfahrzeugs ausgeführten Zugfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist die als Anhängersteuereinrichtung ausgeführte dritte Baueinheit-Einrichtung 64 einerseits von einem zugfahrzeugseitigen Anhänger-Vorratsdruckbehälter 44 über eine Versorgungsleitung 46 mit Druckluft versorgt und andererseits vom pneumatischen Steuerdruck beispielsweise des Vorderachs-Kanals 18 des Fußbremsmoduls 2 über eine zweite Druckleitung 23 pneumatisch durch einen Back-up-Druck gesteuert wird. Die zweite Druckleitung 23 ist hierzu an einen weiteren, in Fig. 1 nicht gezeigten pneumatischen Baueinheit-Eingangsanschluss angeschlossen, um die dritte Baueinheit-Einrichtung 64 in einer pneumatischen Redundanz pneumatisch steuern zu können.

Weiterhin erhält die dritte Baueinheit-Einrichtung 64 auch ein elektrisches Anhängersteuersignal vom zentralen EBS-Bremssteuergerät 14 über eine elektrische Steuerleitung 54, die beispielsweise ebenfalls an den ersten elektrischen Baueinheit-Eingangsanschluss 19 angeschlossen ist. Weiterhin wird die dritte Baueinheit-Einrichtung 64 von der zweiten Baueinheit-Einrichtung 66, die hier als Parkbremseinrichtung ausgeführt ist, über eine interne pneumatische Verbindung 106 der elektro-pneumatischen Baueinheit GSAT pneumatisch gesteuert. Schließlich schleift die dritte Baueinheit-Einrichtung 64 die vom Anhänger-Druckluftvorrat 44 stammende Druckluft unter Vorratsdruck an einen Kupplungskopf "Vorrat" 68 des Zugfahrzeugs durch.

Die dritte Baueinheit-Einrichtung 64 enthält ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Anhängersteuersignal über diese Magnetventile und das Relaisventil einen Steuerdruck für den Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Bremsdruck für den Kupplungskopf "Bremse" 70. Mittels eines in die dritte Baueinheit-Einrichtung 64 integrierten Drucksensors wird dieser Steuerdruck für den Kupplungskopf "Bremse" 70 gemessen und an das zentrale Bremssteuergerät 14 gemeldet.

Fällt die vorrangige elektrische Steuerung durch das zentrale Bremssteuergerät 14 aus, so schaltet das integrierte Back-up-Magnetventil durch und das integrierte Relaisventil wird im Rahmen der pneumatischen Redundanz durch den in der zweiten Druckleitung 23 geführten pneumatischen Backup-Druck des Vorderachs-Bremskreises gesteuert.

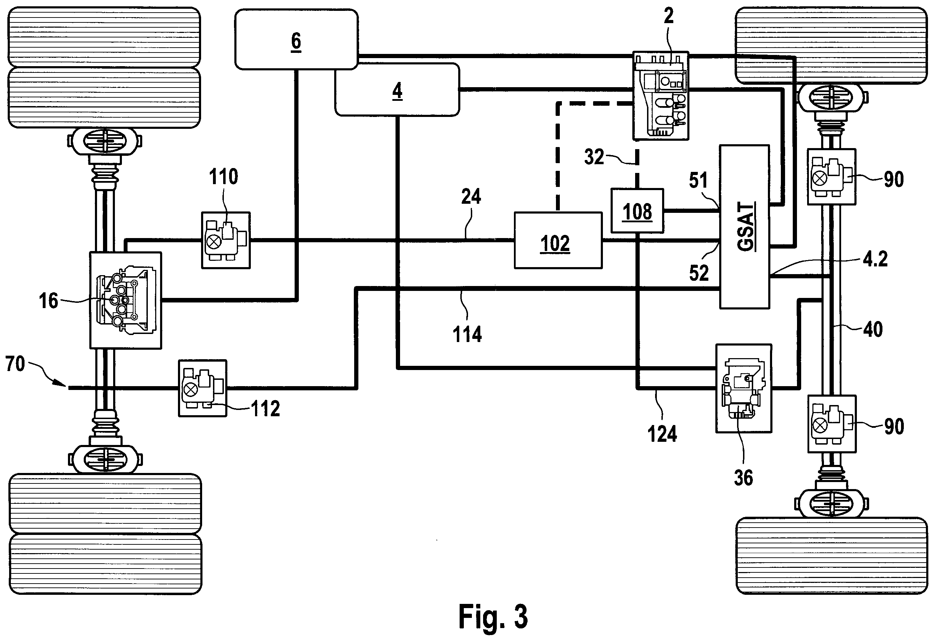

Die Bremszuspanneinrichtungen der Hinterachse sind bevorzugt als bekannte Kombizylinder, d.h. als Kombination eines aktiven Betriebsbremszylinders 50 und eines passiven Federspeicherbremszylinders 94 ausgebildet (Kombizylinder). "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind hier beispielsweise nur aktive Betriebsbremszylinder 48 vorgesehen. Alternativ können dort ebenfalls Federspeicherbremszylinder 94 vorgesehen sein **(****Fig. 3****,** **Fig. 4****).**

Das als Baueinheit ausgeführte elektro-pneumatische 2-Kanal-Druckregelmodul 16 für die Hinterachse hat zwei getrennt regelbare Druckregelkanäle, wobei für jeden Druckregelkanal auf der Basis einer von dem ersten Druckluftvorrat 6 stammenden Vorratsdruck abhängig von dem Bremsanforderungssignal des Fußbremsmoduls 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um die gemessenen Ist-Bremsdrücke an den Soll-Bremsdruck gemäß der Betriebsbremsanforderung anzupassen bzw. einzuregeln. In dem 1-Kanal-Druckregelmodul 36 der Vorderachse wird hingegen ein Bremsdruck für beide Bremszylinder 48 der Räder der Vorderachse geregelt.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Druckregelmodule 16, 36 bis zu den zugeordneten Betriebsbremszylindern 48, 50 von dem pneumatischen Strömungsweg eines jeweils anderen Druckregelkanals pneumatisch getrennt ausgebildet sind.

Weiterhin ist in den Bremsleitungen 40 zwischen dem 1-Kanal-Druckregelmodul 36 und den Betriebsbremszylindern 48 jeweils ein durch eine elektrische Steuerleitung 38 von dem zentralen Bremssteuergerät 14 gesteuertes erstes ABS-Drucksteuerventil 90 angeordnet. Die ersten ABS-Drucksteuerventile 90 sind zum Druckhalten, Drucksenken und Drucksteigern ausgebildet, um dadurch einen an dem betreffenden Vorderrad auftretenden und detektierten Bremsschlupf individuell im Sinne einer Bremsschlupfregelung zu regeln.

Zur Ausbildung eines elektronisch geregelten Bremssystems (EBS) mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36 besonders bevorzugt ein eigener pneumatischer Back-up-Kreis zugeordnet, mit je einem Backup-Magnetventil je Kanal für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremsmoduls 2 gebildeten pneumatischen Back-up- oder Steuerdrucks, aus welchem bei einem Ausfall von elektrischen/elektronischen Komponenten der jeweilige Bremsdruck an den Arbeitsdruckanschlüssen der Druckregelmodule 16, 36 gebildet wird.

Optional kann diese pneumatische Rückfallebene bzw. die pneumatische Redundanz jedoch auch entfallen.

Die elektro-pneumatische Bremseinrichtung 1 des Zugfahrzeugs und die beispielsweise bremsschlupfgeregelte Bremseinrichtung des Anhängers sind, wie bei solchen Bremsanlagen üblich, mittels des Kupplungskopfs "Vorrat" 68 und mittels des Kupplungskopfs "Bremse" 70 miteinander gekoppelt. Das elektrische Bremsanforderungssignal wird vom zentralen Bremssteuergerät 14 über einen CAN-BUS "Anhänger" 78 und eine elektronische Anhängerschnittstelle 76 an den Anhänger übertragen, falls dieser eine elektro-pneumatische Bremsanlage aufweist. Die dritte Baueinheit-Einrichtung 64 wie auch das 2-Kanal-Druckregelmodul 16 und das 1-Kanal-Druckregelmodul 36 werden jeweils über eine elektrische Steuerleitung 54, 88, 92 von dem zentralen Bremssteuergerät 14 angesteuert.

Hier ist der Anhänger beispielsweise ebenfalls mit einer elektro-pneumatischen Bremsanlage mit ABS-Funktion versehen. In diesem Fall ist die elektrische Schnittstelle 76 des Zugfahrzeugs über eine Datenverbindung, beispielsweise ein Kabel mit einer hierzu komplementären Schnittstelle im Anhänger verbunden, die zu einem ABS-Steuergerät im Anhänger führt, um Daten austauschen zu können. Damit wird eine Bremsschlupfregelung für alle Achsen des Anhängers durchgeführt. Wenn aber, wie bevorzugt die Radbremsschlupfermittlung durch Raddrehzahlsensoren an beispielsweise nur einer Achse des 2-achsigen Sattelaufliegers durchgeführt wird, dann wird der Bremsschlupf an der anderen, nicht mit Raddrehzahlsensoren versehenen Achse nach der einen Achse mit Raddrehzahlsensoren geregelt. Daraus können dann die eingangs beschriebenen Nachteile hinsichtlich des Bremsblockierens der anderen Achse ohne Raddrehzahlsensierung und die damit verbundene mangelnde Seitenführung der Räder dieser an- deren Achse entstehen.

Die zweite Baueinheit-Einrichtung 66, die eine Parkbremseinrichtung ausbildet, wird ebenfalls durch das elektronische Steuergerät 31 der elektro-pneumatischen Baueinheit GSAT gesteuert, die dann elektrische Parkbremsanforderungssignale von einer Parkbremsbetätigungseinrichtung 98 empfängt, welche über eine elektrische Steuerleitung 100 über die zweiten elektrischen Baueinheit-Eingangsanschluss 25 in das elektronische Steuergerät 31 eingesteuert werden, welches dann abhängig von den Parkbremsanforderungssignalen die zweite Baueinheit-Einrichtung 66 steuert. Dabei werden die Parkbremsanforderungssignale abhängig von einer Betätigung eines Parkbremsbetätigungsorgans erzeugt. Dieses Parkbremsbetätigungsorgan ist typischerweise ein Hebel, Wipptaster oder Drucktaster und wird üblicherweise vom Fahrer mit der Hand betätigt.

Insofern sind die Parkbremssteuerroutinen in das elektronische Steuergerät 31 integriert. Die zweite Baueinheit-Einrichtung 66 umfasst beispielsweise wenigstens ein bistabiles Magnetventil, ein Relaisventil sowie einen Drucksensor. Ein zweiter Baueinheit-Ausgangsanschluss 28.1 der zweiten Baueinheit-Einrichtung 66 ist dann über eine pneumatische Leitung 104 mit den Federspeicherbremszylindern 94 der Hinterachse verbunden. Die zweite Baueinheit-Einrichtung 66 steuert über die interne pneumatische Verbindung 106 der elektro-pneumatischen Baueinheit GSAT die dritte Baueinheit-Einrichtung 64 pneumatisch, wie oben bereits erwähnt worden ist.

Wie aus **Fig.** 3 hervorgeht, welche Komponenten der elektro-pneumatischen Bremseinrichtung 1 darstellt, die in Fig. 2 nicht gezeigt sind, ist beispielsweise ein erstes Select-High-Ventil 102 vorgesehen, das den größeren pneumatischen Druck von dem an dem ersten Baueinheit-Ausgangsanschlüssen 52 von der elektro-pneumatischen Baueinheit GSAT ausgesteuerten Druck und dem von dem pneumatischen Hinterachs-Kanal 26 des Fußbremsmoduls 2 ausgesteuerten Druck in die erste Druckleitung 24 weiterleitet, die an den Backup-Anschluss des 2-Kanal-Druckregelmoduls 16 an der Hinterachse angeschlossen ist.

Weiterhin ist beispielsweise ein zweites Select-High-Ventil 108 vorgesehen, das den größeren pneumatischen Druck von dem an dem ersten Baueinheit-Ausgangsanschlüssen 51 von der elektro-pneumatischen Baueinheit GSAT ausgesteuerten Druck und dem von dem pneumatischen Vorderachs-Kanal 18 des Fußbremsmoduls 2 über die dritte Druckleitung 32 ausgesteuerten Druck in eine siebte Druckleitung 124 weiterleitet, die an den Backup-Anschluss des 1-Kanal-Druckregelmoduls 36 der Vorderachse angeschlossen ist.

In die erste Druckleitung 24 ist ein zweites ABS-Drucksteuerventil 110 geschaltet. Weiterhin ist in einen vom ersten pneumatischen Baueinheit-Ausgangsanschluss 52 zum Kupplungskopf "Bremse" 70 führenden vierten Druckleitung 114 beispielsweise ein drittes ABS-Drucksteuerventil 112 geschaltet. Das zweite ABS-Drucksteuerventil 110 ist von dem integrierten elektronischen Steuergerät 31 der elektro-pneumatischen Einheit GSAT im Sinne wenigstens einer Bremsschlupfregelung gesteuert. Außerdem ist ein dritter pneumatischer Baueinheit-Ausgangsanschluss 4.2 der dritten pneumatische Baueinheit-Ausgangsanschlüsse 4.2, 21.1, 22.1 mit der Bremsleitung 40 an der Vorderachse verbunden. Das dritte Drucksteuerventil 112 wird bevorzugt von dem zentralen Bremssteuergerät 14 des EBS gesteuert, um bei einem Ausfall der elektro-pneumatischen Einheit GSAT bzw. von dessen integriertem elektronischen Steuergerät 31 den Anhängerbremsdruck im Sinne einer Bremsschlupfregelung zu modulieren.

Aus Übersichtlichkeitsgründen sind in **Fig.** 2 das zweite ABS-Drucksteuerventil 110, das dritte ABS-Drucksteuerventil 110 und die beiden Select-High-Ventile 102, 108 nicht gezeigt.

Wie in **Fig.** 4 gezeigt ist, kann eine fünften Druckleitung 118 vorgesehen sind, welche sich zwischen einem zweiten pneumatischen Baueinheit-Ausgangsanschluss 28.3 der zweiten pneumatischen Baueinheit-Ausgangsanschlüsse 28.1, 28.2, 28.3 der elektro-pneumatischen Baueinheit GSAT und den Federspeicherbremszylindern 94 erstreckt. Weiterhin kann auch eine sechste Druckleitung 122 vorgesehen sein, welche sich zwischen einem dritten pneumatischen Baueinheit-Ausgangsanschluss 22.1 der dritten pneumatischen Baueinheit-Ausgangsanschlüsse 4.2, 21.1, 22.1 der elektro-pneumatischen Baueinheit GSAT und dem Kupplungskopf "Bremse" 70 erstreckt.

Das zentrale Bremssteuergerät 14 und die beiden Druckregelmoduln 16, 36 und die ersten ABS-Drucksteuerventile 90 werden beispielsweise von einer hier nicht gezeigten ersten elektrischen Energieversorgung mit elektrischer Energie versorgt. Hingegen werden die elektro-pneumatische Baueinheit GSAT, die ersten ABS-Druckregelmodule 90 und auch die zweiten und dritten ABS-Drucksteuerventile und von einer hier nicht gezeigten zweiten elektrischen Energieversorgung mit elektrischer Energie versorgt, welche unabhängig von der ersten elektrischen Energieversorgung ist.

Vor diesem Hintergrund ist die Funktionsweise der Bremseinrichtung 1 wie folgt:

### Normalbetrieb

Bei einem Bremsvorgang betätigt der Fahrer das Bremspedal und damit das Fußbremsmodul 2, wodurch im Normalbetrieb in dem elektrischen Kanal 28 ein elektrisches Bremsanforderungssignal analog zur gewünschten Soll-Verzögerung bzw. zum Fahrerbremswunsch erzeugt und in das zentrale Bremssteuergerät 14 eingesteuert wird, welches daraufhin über die elektrischen Steuerleitungen 54, 88, 92 entsprechend dem Bremsanforderungssignal und eventuell abhängig von weiteren Parametern wie der jeweiligen Ladungsverteilung jeweils ein Signal für einen Soll-Bremsdruck optional in das elektronische Steuergerät 31 der elektro-pneumatischen Einheit GSAT, in das 2-Kanal-Druckregelmodul 16 der Hinterachse sowie das 1-Kanal-Druckregelmodul 36 der Vorderachse einsteuert. Im Normalbetrieb hat jedoch das elektronische Steuergerät 31 der elektro-pneumatischen Einheit GSAT vorzugsweise keinen Einfluss auf die Betriebsbremse des Zugfahrzeugs.

Dabei werden in den Druckregelmoduln 16, 36 und in der dritten Baueinheit-Einrichtung 64 jeweils integrierte Magnetventile und Backup-Magnetventile, die meist als 2/2-Wege-Magnetventile ausgebildet sind, entsprechend der Bremsanforderung geschaltet, damit sie die ebenfalls integrierten Relaisventile pneumatisch steuern, um einen gemäß der Bremsanforderung entsprechenden Soll-Bremsdruck in die betreffenden Bremszylinder 48, 50 des Zugfahrzeugs bzw. über den Kupplungskopf "Bremse" 70 in die Bremszylinder des Anhängers einzusteuern. Die in den Druckregelmoduln 16, 36 und in der dritten Baueinheit-Einrichtung 64 integrierten Drucksensoren melden dann den Ist-Bremsdruck bzw. Ist-Steuerdruck an lokale elektronische Steuergeräte in den Druckregelmoduln 16, 36 bzw. an das elektronische Steuergerät 31 der elektro-pneumatischen Baueinheit GSAT, wobei daraufhin durch Ansteuerung der Magnetventile der jeweilige Soll-Bremsdruck eingeregelt wird. Im Normalbetrieb dient die elektro-pneumatischen Einheit GSAT bevorzugt als eine Art "Gateway" für die Funktionalität der Anhängerbremsen, d.h. die elektro-pneumatischen Einheit GSAT erhält das Bremsanforderungssignal und steuert einen entsprechenden Anhängerbremsdruck am Kupplungskopf "Bremse" 70 aus. Dieser Anhängerbremsdruck kann sensorisch erfasst und an die elektro-pneumatischen Einheit GSAT rückgemeldet werden, um eine Druckregelung insbesondere im Rahmen des EBS zu realisieren.

Wenn das Bremsanforderungssignal für das zentrale Bremssteuergerät 14 anstatt vom Fußbremsmodul 2 von einem fahrerunabhängig agierenden Fahrassistenzsystem wie z.B. einem ESP (Electronic Stability Program), einem ACC (Adaptive Cruise Control), einem Notbremsassistenten oder von einer Steuereinrichtung eines Autopiloten zum wenigstens teilautonomen Fahren erzeugt wird, so laufen die Betriebsbremsfunktionen wie oben beschrieben ab.

Falls der Bremsschlupf eines Rades oder mehrerer Räder des Zugfahrzeugs und/oder des Anhängers eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der ersten ABS-Drucksteuerventile 90 an der Vorderachse bzw. des Druckregelmoduls 16 an der Hinterachse durch die in dem zentralen EBS-Bremssteuergerät 14 implementierten ABS-Routinen die Bremsdrücke für das Zugfahrzeug so eingestellt, dass die Bremsschlupf-Regeldifferenz ausgeregelt wird.

In dem zentralen EBS-Bremssteuergerät 14 sind Kompatibilitätsbänder gespeichert, welche das Verhältnis zwischen der jeweils gewünschten Abbremsung z der Zugfahrzeug-Anhängerkombination und der daraus resultierenden Bremskraft des Anhängers bzw. und dem Druck am Kupplungskopf "Bremse" des Zugfahrzeugs festlegen. Der sich aus dem Kompatibilitätsband ergebende Bremsdruck für die Bremsanlage des Anhängers kann dann optional noch durch eine Koppelkraftregelung modifiziert wer- den. Dann wird das Anhängersteuermodul 64 von dem zentralen Bremssteuergerät 14 angesteuert, um den pneumatischen Steuerdruck im Kupplungskopf "Bremse" 70 für den Anhänger entsprechend dieser Vorgaben einzustellen. Somit würde der Bremsdruck im Anhänger abhängig von dem durch die Bremsschlupfregelung beeinflussten Bremsdruck im Zugfahrzeug gebildet.

Zusammenfassend bildet daher der in ihrer absoluten Größe vom Bremsanforderungssignal oder von der vorgegebenen Soll-Verzögerung der Zugfahrzeug-Anhängerkombination, von der ansprechenden Bremsschlupfregelung (Reibwert der Fahrbahnoberfläche) des Zugfahrzeugs, vom Kompatibilitätsband Zugfahrzeug-Anhänger und eventuell noch von einer vorhandenen Koppelkraftregelung abhängige Bremsdruck der Bremsanlage des Anhängers dann einen Referenzbremsdruck für die Bremsanlage des Anhängers. Anstatt eines Referenzbremsdrucks kann auch eine Referenzbremskraft des Anhängers oder eine Referenzabbremsung des Anhängers herangezogen werden, welche sich auf die gleichen oben beschriebenen Umstände bezieht.

Wenn nach dem Einbremsen der Zugfahrzeug-Anhängerkombination mittels des elektronisch gegelten Bremssystems (EBS) in den Fahrzeugstillstand im Rahmen der normalen Parkbremsfunktion die Parkbremsbetätigungseinrichtung 98 in die Stellung "Parken" betätigt wird, so wird ein entsprechendes Parkbremsanforderungssignal in das elektronische Steuergerät 31 der elektro-pneumatischen Baueinheit GSAT eingesteuert, welche daraufhin die integrierte zweite Baueinheit-Einrichtung 66 steuert, um den Baueinheit-Ausgangsanschluss 28.1 der elektro-pneumatischen Baueinheit GSAT und damit auch über die Leitung 104 die Federspeicherbremszylinder 94 zu entlüften, welche daraufhin zuspannen. Über die interne Verbindung 106 wird auch die dritte Baueinheit-Einrichtung 64 der elektro-pneumatischen Baueinheit GSAT entlüftet, wobei die dritte Baueinheit-Einrichtung 64 gemäß ihrer invertierenden Eigenschaft dann den Kupplungskopf "Bremse" 70 belüftet, um die Anhängerbremsen zuzuspannen.

### (Optionale) Pneumatische Redundanz

Fällt beispielsweise die erste elektrische Energieversorgung aus und/oder wird durch Fremd- oder Eigenüberwachung ein Fehler in dem zentralen Bremssteuergerät 14 und/oder in einem der Druckregelmodule 16, 36 detektiert, so ist der vorrangige elektrische Primär-Steuerkreis und damit der elektrische Normalbetrieb des elektronisch geregelten Bremssystems (EBS) gestört. Dann kann beispielsweise ein rein pneumatischer Redundanz-Bremskreis zum Einsatz kommen, der allein vom Fahrer gesteuert ist.

Bei dem rein pneumatischen Redundanz-Bremskreis strömen die vom Fußbremsmodul 2 in die erste Druckleitung 24 und die zweite Druckleitung 23 eingesteuerten Backup-Drücke durch die dann stromlos geöffneten Backup-Ventile der Druckregelmodule 16, 36 und von den Druckregelmoduln 16, 36 dann in die pneumatischen Bremszylinder 48, 50 an der Vorderachse und an der Hinterachse zum Zuspannen.

Da die ersten ABS-Drucksteuerventile 90, das zweite ABS-Drucksteuerventil 110 und optional auch das dritte ABS-Drucksteuerventil 112 bevorzugt von der zweiten elektrischen Energieversorgung und/oder von der elektro-pneumatischen Baueinheit GSAT mit elektrischem Strom versorgt sind, bleiben diese auch nach einem Ausfall der ersten elektrischen Energieversorgung funktionsfähig. Alternativ kann das das dritte ABS-Drucksteuerventil 112 auch lediglich von der ersten elektrischen Energieversorgung mit elektrischer Energie versorgt sein. Weiterhin werden die Raddrehzahlsignale der Raddrehzahlsensoren 56 weiterhin in das elektronische Steuergerät 31 der elektro-pneumatischen Baueinheit GSAT eingesteuert. Folglich ist auch bei der pneumatischen Redundanz eine ABS-Regelung möglich. Je nach Ausbaustufe in Bezug auf Sensoren (Lenkwinkelsensor, Gierratensensor, Längs- Querbeschleunigungssensor) und ABS-Drucksteuerventilen kann eine Funktionserweiterung derart vorgesehen sein, dass zusätzlich auch eine Fahrdynamikregelung (ESP) möglich ist.

Mit Bezug auf die **Fig.** 3 kann in diesem Fall das elektronische Steuergerät 31 der elektro-pneumatischen Einheit GSAT die ersten ABS-Drucksteuermodule 90 an der Vorderachse, das dem 2-Kanal-Druckregelmodul 16 an der Hinterachse vorgeordnete zweite ABS-Drucksteuerventil 110 im Sinne einer Bremsschlupfregelung moduliert werden. An der Hinterachse, für welche dann hier beispielsweise lediglich ein einziges zweites ABS-Drucksteuerventil 110 vorgesehen ist, kann beispielsweise das ABS nach dem "Select-Low"- oder "Select-High"-Prinzip geregelt werden. Weitere ABS Drucksteuerventile ausgangsseitig des Hinterachsdruckregelmoduls 16 können verbaut werden, um aus dem GSAT die Hinterachse radindividuell zu regeln. Da in der elektro-pneumatischen Einheit GSAT zudem die Funktionalität der Anhängerbremsdrucksteuerung integriert ist, kann das integrierte elektronische Steuergerät 31 die für diese Funktion vorgesehenen Magnetventile der dritten Baueinheit-Einrichtung (64) antsteuern, um den Anhängerbremsdruck bremschlupfzuregeln. Dann umfasst die eigentlich rein pneumatische Redundanz bevorzugt eine ABS-Regelung hier beispielsweise wenigstens einer Achse und vorzugsweise aller Achsen des Zugfahrzeugs und auch eine ABS-Regelung des Anhängers.

Das in Fig. 3 gezeigte in der vierten Druckleitung 114 angeordnete dritte Drucksteuerventil 112 dient wie oben beschrieben beispielsweise dazu, falls die elektro-pneumatische Einheit GSAT und insbesondere dessen elektronisches Steuergerät 31 ausgefallen ist, den Anhängerbremsdruck am Kupplungskopf "Bremse" 70 zu modulieren. Hierzu wird das dritte Drucksteuerventil 112 bevorzugt durch das EBS bzw. von dessen zentralem Bremssteuergerät 14 gesteuert.

### Erste elektrische Redundanz

Im Rahmen der ersten elektrischen Redundanz erzeugt die elektro-pneumatische Baueinheit GSAT pneumatische Backupdrücke entsprechend dem Betriebsbremsanforderungssignal, welches entweder vom Fahrer via Fußbremsmodul 2 und/oder von einer Steuereinrichtung eines Fahrerassistenzsystems (ACC, Autopilot etc.) erzeugt wird. In der von der elektro-pneumatischen Baueinheit GSAT zu den Druckregelmoduln 16 der Hinterachse gezogenen Druckleitung 24 ist hier bevorzugt das zweite Drucksteuerventil 110 angeordnet, welches beispielsweise abhängig von Raddrehzahlsignalen der Drehzahlsensoren 56 gesteuert wird, um bevorzugt eine Bremsschlupfregelung (ABS), eine Antriebsschlupfregelung (ASR) und/oder eine Fahrdynamikregelung (ESP) zu realisieren. Der Kupplungskopf "Bremse" 70 wird vorzugsweise direkt von der elektro-pneumatischen Baueinheit GSAT mit dem Anhängerbremsdruck beaufschlagt, der abhängig von dem Betriebsbremsanforderungssignal ist. Das dritte Drucksteuerventil 112 ist beispielsweise hierzu offen oder durchgeschaltet.

Daher ist ein elektro-pneumatischer Redundanz-Bremskreis vorgesehen, bei dem die pneumatischen Backup-Steuerdrücke für die elektronischen Druckregelmodule 16, 36 abhängig von dem in die elektro-pneumatische Baueinheit GSAT eingesteuerten Bremsanforderungssignal durch die elektro-pneumatische Baueinheit GSAT erzeugt und an die ersten Baueinheit-Ausgangsanschlüsse 51, 52 ausgesteuert werden, welche dann über die ersten und siebten Druckleitungen 24, 124 in die pneumatischen Eingänge der elektronischen Druckregelmodule 16, 36 geleitet werden.

Daher kommt für die Fälle, in denen der elektrische Normalbetrieb des elektronisch geregelten Bremssystems (EBS) gestört ist und keine pneumatische Redundanz vorhanden (z.B. aufgrund im Fußbremsmodul 2 fehlender pneumatischer Kanäle 18, 26), verhindert (z.B. wegen unterbliebener Reaktion des Fahrers) oder gestört ist und demzufolge keine oder keine ausreichenden pneumatischen Backup-Drücke erzeugt werden, die erste elektrische Redundanz zum Einsatz. Denn wie oben angedeutet, kann das Fußbremsmodul 2 beispielsweise über keinen pneumatischen Vorderachs-Kanal 18 und keinen pneumatischen Hinterachs-Kanal 26 verfügen und/oder die pneumatischen Backup-Drücke der pneumatischen Redundanz sind ausgefallen oder zu niedrig.

Im Rahmen der ersten elektrischen Redundanz steuert das elektronische Steuergerät 31 der elektro-pneumatischen Baueinheit GSAT die erste Baueinheit-Einrichtung 96 an, um über die ersten pneumatischen Baueinheit-Ausgangsanschlüsse 51, 52 in die pneumatischen Eingänge der beiden Select-High-Ventile 102 und 108 die Redundanz-Betriebsbremsdrücke einzusteuern.

Wenn dann gemäß Fig. 3 an den jeweils anderen pneumatischen Eingängen der beiden Select-High-Ventile 102 und 108, die an pneumatischen Vorderachs-Kanal 18 und den pneumatischen Hinterachs-Kanal 26 angeschlossen sind, keine oder zu niedrige Backup-Steuerdrücke anstehen, dann sind die von der elektro-pneumatischen Baueinheit GSAT über die ersten pneumatischen Baueinheit-Ausgangsanschlüsse 51, 52 in die pneumatischen Eingängen der beiden Select-High-Ventile 102 und 108 eingesteuerten Redundanz-Betriebsbremsdrücke höher als die Backup-Drücke und werden dann von den beiden Select-High-Ventilen 102, 108 in die erste pneumatische Druckleitung 24 und in die siebte pneumatische Druckleitung 124 weitergeleitet.

Da die ersten ABS-Drucksteuerventile 90, das zweite ABS-Drucksteuerventil 110 und optional auch das dritte ABS-Drucksteuerventil 112 von der zweiten elektrischen Energieversorgung mit elektrischem Strom versorgt sind, bleiben diese auch nach einem Ausfall der ersten elektrischen Energieversorgung funktionsfähig. Weiterhin werden die Raddrehzahlsignale der Raddrehzahlsensoren 56 weiterhin in das elektronische Steuergerät 31 der elektro-pneumatischen Baueinheit GSAT eingesteuert, weil die Raddrehzahlsensoren 56 daran angeschlossen sind. Folglich ist auch bei der ersten elektrischen Redundanz eine ABS-Regelung möglich.

Auch in diesem Fall steuert dann das elektronische Steuergerät 31 der elektro-pneumatischen Einheit GSAT bevorzugt die ersten ABS-Drucksteuermodule 90 an der Vorderachse, das dem 2-Kanal-Druckregelmodul 16 an der Hinterachse vorgeordnete zweite ABS-Drucksteuerventil 110 derart an, dass die jeweiligen Redundanz-Betriebsbremsdrücke für die Vorderachse, die Hinterachse und den Anhänger im Sinne einer Bremsschlupfregelung moduliert werden. An der Hinterachse, für welche dann hier beispielsweise lediglich ein einziges zweites ABS-Drucksteuerventil 110 vorgesehen ist, kann beispielsweise das ABS nach dem "Select-Low"- oder "Select-High"-Prinzip geregelt werden. Dann umfasst die erste elektrische Redundanz auch eine ABS-Regelung hier beispielsweise aller Achsen des Zugfahrzeugs und auch des Anhängers.

Wenn keine optionale pneumatische Redundanz vorgesehen ist, dann können die beiden Select-High-Ventile 102, 108 von Fig. 3 auch entfallen. In diesem Fall werden von der elektro-pneumatischen Baueinheit GSAT über die ersten pneumatischen Baueinheit-Ausgangsanschlüsse 51, 52 die Redundanz-Betriebsbremsdrücke direkt in die erste pneumatische Druckleitung 24 und in die siebte pneumatische Druckleitung 124 geleitet.

### Zweite elektrische Redundanz

Wenn auf der Ebene der ersten elektrischen Redundanz beispielsweise die elektro-pneumatische Baueinheit GSAT einen Fehler aufweist, z.B. in integrierten Sensoren (z.B. Drucksensoren) oder Aktuatoren (z.B. Magnetventile), dann tritt die zweite elektrische Redundanz in Kraft. Die zweite elektrische Redundanz führt dann die Parkbremse aus, welche hier beispielsweise einkanalig bremsschlupfgeregelt wird abhängig von den Signalen der dann noch verfügbaren Drehzahlsensoren 56. Der Kupplungskopf "Bremse" 70 wird im Rahmen der zweiten elektrischen Redundanz direkt von der elektro-pneumatischen Baueinheit GSAT mit Anhängerbremsdruck versorgt.

Falls daher kein vorrangiger Normalbetrieb des elektronisch geregelten Bremssystems (EBS) möglich ist, entweder keine pneumatische Redundanz vorhanden oder eine solche gestört ist und auch die erste elektrische Redundanz nicht greift, so kommt die zweite elektrische Redundanz des elektronisch geregelten Bremssystems (EBS) zum Einsatz.

Wie oben bereits ausgeführt, wird bei der zweiten elektrischen Redundanz von der elektro-pneumatischen Baueinheit GSAT ein pneumatischer Bremsbremsdruck ausgesteuert, um die Federspeicherbremszylinder 94 bei einer angeforderten Betriebsbremsung abhängig von dem Bremsanforderungssignal (dosiert) zuzuspannen. Anstatt mit den Betriebsbremszylindern 48, 50 wird daher in der zweiten Redundanz mit den Federspeicherbremszylindern 94 die angeforderte Betriebsbremsung durchgeführt, und zwar abhängig von dem Betriebsbremsanforderungssignal.

Um eine höhere Bremskraft zu erzielen können auch an der Vorderachse Kombizylinder mit integrierten Federspeicherbremszylindern 94 angeordnet und von der elektro-pneumatischen Baueinheit GSAT im Sinne der Parkbremsfunktion und auch innerhalb der zweiten Redundanz gesteuert sein (**Fig. 3****,** **Fig. 4**).

Weiterhin werden die Raddrehzahlsignale der Raddrehzahlsensoren 56 auch in das elektronische Steuergerät 31 der elektro-pneumatischen Baueinheit GSAT eingesteuert, welche die beispielsweise aktiven Raddrehzahlsensoren 56 mit Strom versorgt. Folglich ist auch bei der zweiten elektrischen Redundanz eine ABS-Regelung möglich. Da in der elektro-pneumatischen Baueinheit GSAT die Funktionalität eines Anhängersteuermoduls TCM integriert ist (Software und Hardware), kann der Anhängerbremsdruck am Kupplungskopf "Bremse" 70 wenigstens im Rahmen der zweiten elektrischen Redundanz mittels der elektro-pneumatischen Baueinheit GSAT abhängig von dem Bremsanforderungssignal erzeugt und moduliert werden, insbesondere im Sinne einer Bremsschlupfregelung (ABS).

Folglich sind mit der elektro-pneumatischen Baueinheit GSAT von **Fig. 1** innerhalb einer elektro-pneumatischen Bremseinrichtung 1 wenigstens zwei elektrische Redundanzen für ein elektronisch geregeltes Bremssystems (EBS) der elektro-pneumatischen Bremseinrichtung 1 möglich.

### BEZUGSZEICHENLISTE

- 1: Elektro-pneumatische Bremseinrichtung
- 2: Fußbremsmodul
- 3: Betriebsbremsbetätigungsorgan
- 4: zweiter Druckluftvorrat
- 4.2: dritter pneumatischer Baueinheit-Ausgangsanschluss
- 6: erster Druckluftvorrat
- 8: vierte Baueinheit-Einrichtung (Druckluftaufbereitungseinrichtung)
- 10: Versorgungsleitung
- 11: pneumatischer Baueinheit-Eingangsanschluss
- 12: Versorgungsleitung
- 14: zentrales Bremssteuergerät
- 16: 2-Kanal-Druckregelmodul
- 17: Gehäuse
- 18: Vorderachs-Kanal
- 19: erster elektrischer Baueinheit-Eingangsanschluss
- 20: Versorgungsleitung
- 21: erster pneumatischer Baueinheit-Vorratsanschluss
- 22: zweiter pneumatischer Baueinheit-Vorratsanschluss
- 21.1,: 22.1 dritte pneumatische Baueinheit-Ausgangsanschlüsse
- 23: zweite Druckleitung
- 24: erste Druckleitung
- 25: zweiter elektrischer Baueinheit-Eingangsanschluss
- 26: Hinterachs-Kanal
- 28: elektrischer Kanal
- 28.1, 28.2, 28.3: zweite pneumatische Baueinheit-Ausgangsanschlüsse
- 30: Datenbus
- 31: elektronisches Steuergerät
- 32: dritte Druckleitung
- 33: dritter elektrischer Baueinheit-Eingangsanschluss
- 36: 1-Kanal-Druckregelmodul
- 37: erster elektrischer Baueinheit-Ausgangsanschluss
- 38: elektrische Steuerleitung
- 39: Kompressor
- 40: Bremsleitung
- 42: Bremsleitung
- 44: zugfahrzeugseitiger Anhänger-Vorratsdruckbehälter
- 46: Versorgungsleitung
- 48: Betriebsbremszylinder VA
- 50: Betriebsbremszylinder HA
- 51: erster Baueinheit-Ausgangsanschluss
- 52: erster Baueinheit-Ausgangsanschluss
- 54: elektrische Steuerleitung
- 56: Drehzahlsensoren
- 58: elektrische Signalleitungen
- 60: Verschleißsensoren
- 62: elektrische Signalleitungen
- 64: dritte Baueinheit-Einrichtung (Anhängersteuereinrichtung)
- 66: zweite Baueinheit-Einrichtung (Parkbremssteuereinrichtung)
- 68: Kupplungskopf "Vorrat"
- 70: Kupplungskopf "Bremse"
- 76: Anhängerschnittstelle
- 78: Anhänger-Datenbus
- 88: elektrische Steuerleitung
- 90: erstes ABS-Drucksteuerventil
- 92: elektrische Steuerleitung
- 94: Federspeicherbremszylinder
- 96: erste Baueinheit-Einrichtung
- 98: Parkbremsbetätigungseinrichtung
- 100: elektrische Steuerleitung
- 102: erstes Select-High-Ventil
- 104: pneumatische Leitung
- 106: pneumatische Verbindung
- 108: zweites Select-High-Ventil
- 110: zweites ABS-Drucksteuerventil
- 112: drittes ABS-Drucksteuerventil
- 114: vierte Druckleitung
- 118: fünfte Druckleitung
- 122: sechste Druckleitung
- 124: siebte Druckleitung
- GSAT: elektro-pneumatische Baueinheit

## Patentansprüche

1. Elektro-pneumatische Baueinheit (GSAT), welche ausgebildet und eingerichtet ist, um in wenigstens zwei Redundanzen für eine elektro-pneumatische Betriebsbremseinrichtung (EBS) einer elektro-pneumatischen Bremseinrichtung (1) eines zum Ziehen eines Anhängers ausgebildeten Kraftfahrzeugs, einer ersten Redundanz und einer zweiten Redundanz, die elektro-pneumatische Bremseinrichtung (1) zu steuern, wenn ein Normalbetrieb der elektro-pneumatischen Betriebsbremseinrichtung (EBS) nicht möglich ist, bei welchem durch die elektro-pneumatische Betriebsbremseinrichtung (EBS) ein primärer Betriebsbremsdruck erzeugt wird, wobei die elektro-pneumatische Baueinheit (GSAT) wenigstens Folgendes umfasst
a) Wenigstens einen ersten elektrischen Baueinheit-Eingangsanschluss (19) zum Einsteuern eines elektrischen Betriebsbremsanforderungssignals,
b) wenigstens einen ersten pneumatischen Baueinheit-Ausgangsanschluss (51, 52) zum Aussteuern eines pneumatischen Redundanz-Betriebsbremsdrucks an wenigstens einen pneumatischen Betriebsbremszylinder (48, 50),
c) wenigstens einen zweiten pneumatischen Baueinheit-Ausgangsanschluss (28.1, 28.2, 28.3) zum Aussteuern eines pneumatischen Bremsdrucks an wenigstens einen pneumatischen Federspeicherbremszylinder (94),
d) wenigstens ein integriertes, wenigstens von dem am ersten elektrischen Baueinheit-Eingangsanschluss (19) eingesteuerten elektrischen Betriebsbremsanforderungssignal gesteuertes elektronisches Steuergerät (31),
e) eine von dem integrierten elektronischen Steuergerät (31) gesteuerte erste Baueinheit-Einrichtung (96), welche wenigstens ein Magnetventil umfasst und welche wenigstens an den ersten pneumatischen Baueinheit-Ausgangsanschluss (51, 52) angeschlossen ist,
f) eine von dem elektronischen Steuergerät (31) gesteuerte zweite Baueinheit-Einrichtung (66), welche wenigstens ein Magnetventil umfasst und welche an den zweiten Baueinheit-Ausgangsanschluss (28.1, 28.2, 28.3) angeschlossen ist, wobei
g) das elektronische Steuergerät (31) ausgebildet ist, um
g1) im Rahmen der ersten Redundanz, wenn der Normalbetrieb der elektro-pneumatischen Betriebsbremseinrichtung (EBS) nicht möglich oder gestört ist, abhängig von dem am ersten elektrischen Baueinheit-Eingangsanschluss (19) eingesteuerten elektrischen Betriebsbremsanforderungssignal die erste Baueinheit-Einrichtung (96) derart anzusteuern, dass an dem ersten Baueinheit-Ausgangsanschluss (51, 52) der Redundanz-Betriebsbremsdruck ausgesteuert wird, um den Betriebsbremszylinder (48, 50) zuzuspannen, und um
g2) im Rahmen der zweiten Redundanz, wenn der Normalbetrieb der elektro-pneumatischen Betriebsbremseinrichtung (EBS) nicht möglich und auch die erste Redundanz ausgefallen ist, abhängig von dem an dem ersten elektrischen Baueinheit-Eingangsanschluss (19) eingesteuerten elektrischen Betriebsbremsanforderungssignal die zweite Baueinheit-Einrichtung (66) derart anzusteuern, dass an dem zweiten Baueinheit-Ausgangsanschluss (28.1, 28.2. 28.3) der pneumatische Bremsdruck ausgesteuert wird, um den Federspeicherbremszylinder (94) zuzuspannen.

2. Elektro-pneumatische Baueinheit (GSAT) nach Anspruch 1, **dadurch gekennzeichnet, dass** sie wenigstens einen zweiten elektrischen Baueinheit-Eingangsanschluss (25) zum Einsteuern eines elektrischen Parkbremsanforderungssignals umfasst, wobei das elektronische Steuergerät (31) ausgebildet ist, um im Rahmen einer Parkbremsfunktion abhängig von dem am zweiten elektrischen Baueinheit-Eingangsanschluss (25) eingesteuerten elektrischen Parkbremsanforderungssignal die zweite Baueinheit-Einrichtung (66) anzusteuern, um an dem zweiten Baueinheit-Ausgangsanschluss (28.1, 28.2, 28.3) einen pneumatischen Parkbremsdruck auszusteuern.

3. Elektro-pneumatische Baueinheit (GSAT) nach Anspruch 1 oder 2, **dadurch gekennzeichnet, dass** sie wenigstens einen dritten elektrischen Baueinheit-Eingangsanschluss (33) umfasst, welcher ausgebildet ist, zum Einsteuern wenigstens eines elektrischen Signals in das integrierte elektronische Steuergerät (31), welches wenigstens eines der folgenden elektrischen Signale ist:
- ein raddrehzahlabhängiges Signal, welches eine Raddrehzahl wenigstens eines Rads des Kraftfahrzeugs und/oder des Anhängers repräsentiert, und/oder
- ein drehratenabhängiges Signal, welches eine Drehrate des Kraftfahrzeugs und/oder des Anhängers repräsentiert, und/oder
- ein lenkwinkelabhängiges Signal, welches einen Lenkwinkel oder Lenkradwinkel des Kraftfahrzeugs repräsentiert, und/oder
- ein längs- oder querbeschleunigungsabhängiges Signal, welches eine Längs- und/oder Querbeschleunigung des Kraftfahrzeugs und/oder des Anhängers repräsentiert.

4. Elektro-pneumatische Baueinheit (GSAT) nach Anspruch 3, **dadurch gekennzeichnet, dass** sie eingerichtet und ausgebildet ist, um wenigstens einige der an dem dritten elektrischen Baueinheit-Eingangsanschluss (33) empfangenen elektrischen Signale zu verarbeiten, insbesondere im Sinne einer Fahrdynamik- und/oder Fahrstabilitätsregelung.

5. Elektro-pneumatische Baueinheit (GSAT) nach Anspruch 3 oder 4, **dadurch gekennzeichnet, dass** sie wenigstens einen ersten elektrischen Baueinheit-Ausgangsanschluss (37) für wenigstens ein ABS-Drucksteuerventil (90, 110) aufweist.

6. Elektro-pneumatische Baueinheit (GSAT) nach Anspruch 5, **dadurch gekennzeichnet, dass** in dem integrierten elektronischen Steuergerät (31) eine ABS-Regelung implementiert ist, welche ausgebildet ist, um wenigstens abhängig von wenigstens einem am dritten elektrischen Baueinheit-Eingangsanschluss (33) eingesteuerten elektrischen Signal an den ersten elektrischen Baueinheit-Ausgangsanschluss (37) ein elektrisches Steuersignal für das wenigstens eine ABS-Drucksteuerventil (90, 110) auszusteuern.

7. Elektro-pneumatische Baueinheit (GSAT) nach Anspruch 6, **dadurch gekennzeichnet, dass** das integrierte elektronische Steuergerät (31) ausgebildet ist, dass wenigstens eine Regelung im Rahmen der ersten Redundanz und/oder im Rahmen der zweiten Redundanz der folgenden Regelungen ausgeführt wird:
- eine ABS-Regelung, und/oder
- eine ASR-Regelung, und/oder
- eine ESP-Regelung.

8. Elektro-pneumatische Baueinheit (GSAT) nach einem der vorhergehenden Ansprüche, **dadurch gekennzeichnet, dass** sie weiterhin eine dritte Baueinheit-Einrichtung (64) mit wenigstens einem Magnetventil sowie wenigstens einen an die dritte Baueinheit-Einrichtung (64) angeschlossenen dritten pneumatischen Baueinheit-Ausgangsanschluss (4.2, 21.1, 22.1) umfasst, wobei das integrierte elektronische Steuergerät (31) ausgebildet ist, um die dritte Baueinheit-Einrichtung (64) abhängig von dem elektrischen Betriebsbremsanforderungssignal derart anzusteuern, dass an dem dritten pneumatischen Baueinheit-Ausgangsanschluss (4.2, 21.1, 22.1) ein pneumatischer Anhängerbremsdruck für wenigstens einen Anhänger des Kraftfahrzeugs erzeugt wird.

9. Elektro-pneumatische Baueinheit (GSAT) nach einem der vorhergehenden Ansprüche, **dadurch gekennzeichnet, dass** sie eine vierte Baueinheit-Einrichtung (8) mit wenigstens einem Magnetventil beinhaltet, wobei das integrierte elektronischen Steuergerät (31) ausgebildet ist, um durch Ansteuerung der vierten Baueinheit-Einrichtung (8) wenigstens eine Druckluftaufbereitungsfunktion auszuführen.

10. Elektro-pneumatische Baueinheit (GSAT) nach Anspruch 9, **dadurch gekennzeichnet, dass** sie zur Druckluftversorgung wenigstens eines Druckluftvorrats (4, 6) wenigstens einen mit der vierten Baueinheit-Einrichtung (8) verbundenen Baueinheit-Vorratsanschluss (21, 22) aufweist.

11. Elektro-pneumatische Bremseinrichtung (1) für ein Kraftfahrzeug, welches zum Ankoppeln eines Anhängers geeignet ist, welche wenigstens Folgendes umfasst:
a) die elektro-pneumatische Baueinheit (GSAT) nach einem der vorhergehenden Ansprüche,
b) die elektro-pneumatische Betriebsbremseinrichtung (EBS), welche wenigstens Folgendes umfasst:
b1) ein Primär-Betriebsbremssteuergerät (14),
b2) wenigstens ein vom dem Primär-Betriebsbremssteuergerät (14) elektrisch gesteuertes elektro-pneumatisches Druckregelmodul (16, 36), und
b3) den wenigstens einen Betriebsbremszylinder (48, 50), der an
einen pneumatischen Druckregelmodul-Ausgangsanschluss des Druckregelmoduls (16, 36) angeschlossen ist, wobei das Primär-Betriebsbremssteuergerät (14) das Druckregelmodul (16, 36) abhängig von dem elektrischen Betriebsbremsanforderungssignal elektrisch steuert, um an dem Druckregelmodul-Ausgangsanschluss den Primär-Betriebsbremsdruck auszusteuern.

12. Elektro-pneumatische Bremseinrichtung nach Anspruch 11, **dadurch gekennzeichnet, dass** sie eine elektro-pneumatische Parkbremseinrichtung aufweist, welche wenigstens den wenigstens einen pneumatischen Federspeicherbremszylinder (94), der an den zweiten pneumatischen Baueinheit-Ausgangsanschluss (28.1, 28.2, 28.3) angeschlossen ist, und eine elektrische Parkbremsbetätigungseinrichtung (98), das elektronische Steuergerät (31) und die zweite Baueinheit-Einrichtung (66) der elektro-pneumatischen Baueinheit (GSAT) umfasst, wobei das elektronische Steuergerät (31) der elektro-pneumatischen Baueinheit (GSAT) abhängig von dem von der elektrischen Parkbremsbetätigungseinrichtung (98) erzeugten und in den zweiten elektrischen Baueinheit-Eingangsanschluss (25) der elektro-pneumatischen Baueinheit (GSAT) eingesteuerten elektrischen Parkbremsanforderungssignal die zweite Baueinheit-Einrichtung (66) der elektro-pneumatischen Baueinheit (GSAT) ansteuert, um an dem zweiten pneumatischen Baueinheit-Ausgangsanschluss (28.1, 28.2, 28.3) den pneumatischen Parkbremsdruck an wenigstens einen pneumatischen Federspeicherbremszylinder (94) auszusteuern.

13. Elektro-pneumatische Bremseinrichtung nach Anspruch 11 oder 12, **dadurch gekennzeichnet, dass** sie wenigstens einen der folgenden Sensoren aufweist:
a) wenigstens einen Raddrehzahlsensor (56), welcher ausgebildet und eingerichtet ist, um raddrehzahlabhängige Signale zu erzeugen, und/oder
b) wenigstens einen Drehratensensor, welcher ausgebildet und eingerichtet ist, um drehratenabhängige Signale zu erzeugen, und/oder
c) wenigstens einen Lenkwinkelsensor, welcher ausgebildet und eingerichtet ist, um lenkwinkelabhängige Signale zu erzeugen, und/oder
d) wenigstens einen Beschleunigungssensor, welcher ausgebildet und eingerichtet ist, um längs- und/oder querbeschleunigungsabhängige Signale zu erzeugen.

14. Elektro-pneumatische Bremseinrichtung nach Anspruch 13, **dadurch gekennzeichnet, dass** die elektro-pneumatische Baueinheit (GSAT) ausgebildet und eingerichtet ist, um die Signale des wenigstens einen Sensors an dem dritten elektrischen Baueinheit-Eingangsanschluss (33) direkt zu empfangen und zu verarbeiten, wobei
a) der wenigstens eine Raddrehzahlsensor (56) an den dritten elektrischen Baueinheit-Eingangsanschluss (33) der elektro-pneumatischen Baueinheit (GSAT) angeschlossen ist, und/oder
b) der wenigstens eine Drehratensensor an den dritten elektrischen Baueinheit-Eingangsanschluss (33) der elektro-pneumatischen Baueinheit (GSAT) angeschlossen ist, und/oder
c) der wenigstens einen Lenkwinkelsensor an den dritten elektrischen Baueinheit-Eingangsanschluss (33) der elektro-pneumatischen Baueinheit (GSAT) angeschlossen ist, und/oder
d) der wenigstens eine Beschleunigungssensor an den dritten elektrischen Baueinheit-Eingangsanschluss (33) der elektro-pneumatischen Baueinheit (GSAT) angeschlossen ist.

15. Elektro-pneumatische Bremseinrichtung nach Anspruch 13, **dadurch gekennzeichnet, dass** die elektro-pneumatische Baueinheit (GSAT) ausgebildet und eingerichtet ist, um die Signale des wenigstens einen Sensors zu verarbeiten und von einem weiteren elektronischen Steuergerät des Kraftfahrzeugs indirekt zu empfangen, insbesondere über einen Datenbus, an welchen die elektro-pneumatische Baueinheit (GSAT) und das weitere elektronische Steuergerät angeschlossen sind.

16. Elektro-pneumatische Bremseinrichtung nach einem der Ansprüche 10 bis 15, **dadurch gekennzeichnet, dass** sie wenigstens ein dem Druckregelmodul-Ausgangsanschluss des Druckregelmoduls (16, 36) und dem pneumatischen Betriebsbremszylinder (48, 50) zwischengengeordnetes erstes ABS-Drucksteuerventil (90) umfasst.

17. Elektro-pneumatische Bremseinrichtung nach Anspruch 16, **dadurch gekennzeichnet, dass** das erste ABS-Drucksteuerventil (90)
a) im Normalbetrieb von dem Primär-Betriebsbremssteuergerät (14) abhängig von dem elektrischen Signal derart gesteuert ist, dass es den an dem Druckregelmodul-Ausgangsanschluss ausgesteuerten primären Betriebsbremsdruck im Sinne einer Bremsschlupfregelung anpasst, und welche
b) im Rahmen der ersten Redundanz von dem integrierten elektronischen Steuergerät (31) abhängig von dem elektrischen Signal derart gesteuert ist, dass es den Redundanz-Betriebsbremsdruck im Sinne einer Bremsschlupfregelung anpasst.

18. Elektro-pneumatische Bremseinrichtung nach einem der Ansprüche 10 bis 17, **dadurch gekennzeichnet, dass** sie in einer pneumatischen Druckleitung (24) zwischen dem ersten Baueinheit-Ausgangsanschluss (51, 52) und einem pneumatischen Eingang des wenigstens einen elektro-pneumatischen Druckregelmoduls (16) wenigstens ein zweites ABS-Drucksteuerventil (110) umfasst.

19. Elektro-pneumatische Bremseinrichtung nach Anspruch 18, **dadurch gekennzeichnet, dass** das zweite ABS-Drucksteuerventil (110) im Rahmen der ersten Redundanz von dem integrierten elektronischen Steuergerät (31) abhängig von dem elektrischen Signal derart gesteuert ist, dass es den Redundanz-Betriebsbremsdruck im Sinne einer Bremsschlupfregelung anpasst.

20. Elektro-pneumatische Bremseinrichtung nach Anspruch 18 oder 19, **dadurch gekennzeichnet, dass** an den dritten pneumatischen Baueinheit-Ausgangsanschluss (21.1) der Kupplungskopf "Bremse" (70) angeschlossen ist.

21. Elektro-pneumatische Bremseinrichtung nach Anspruch 20, **dadurch gekennzeichnet, dass** die elektro-pneumatische Baueinheit (GSAT) ausgebildet und eingerichtet ist, um an dem dritten pneumatische Baueinheit-Ausgangsanschluss (21.1) einen Bremsdruck für den Anhänger zu erzeugen, welcher in Bezug auf die Fahrstabilität und/oder Fahrdynamik des Kraftfahrzeugs und/oder des Anhängers geregelt oder gesteuert ist.

22. Elektro-pneumatische Bremseinrichtung nach einem der Ansprüche 10 bis 21, **dadurch gekennzeichnet, dass** die elektro-pneumatische Baueinheit (GSAT) und insbesondere das integrierte elektronische Steuergerät (31) der elektro-pneumatischen Baueinheit (GSAT) ausgebildet und eingerichtet sind, dass der an dem zweiten Baueinheit-Ausgangsanschluss (28.1, 28.2, 28.3) ausgesteuerte pneumatische Bremsdruck insbesondere im Rahmen der zweiten Redundanz im Sinne einer Bremsschlupfregelung moduliert wird.

23. Elektro-pneumatische Bremseinrichtung nach einem der Ansprüche 10 bis 22, **dadurch gekennzeichnet, dass** ein Fußbremsmodul (2) und/oder eine Autopiloteinrichtung vorgesehen ist (sind), welche(s) das elektrische Betriebsbremsanforderungssignal erzeugt.

24. Elektro-pneumatische Bremseinrichtung nach einem der Ansprüche 10 bis 23, **dadurch gekennzeichnet, dass** das integrierte elektronische Steuergerät (31) das Primär-Betriebsbremssteuergerät (14) und/oder das Druckregelmodul (16, 36) auf Fehler überwacht und bei einem festgestellten Fehler die erste Redundanz aktiviert.

25. Elektro-pneumatische Bremseinrichtung nach einem der Ansprüche 10 bis 24, **dadurch gekennzeichnet, dass** eine erste elektrische Energiequelle vorgesehen ist, welche unabhängig von einer zweiten elektrischen Energiequelle ist, wobei
a) wenigstens das Primär-Betriebsbremssteuergerät (14) und das Druckregelmodul (16, 36) von der ersten elektrischen Energiequelle mit elektrischer Energie versorgt werden, und wobei
b) wenigstens die elektro-pneumatische Baueinheit (GSAT) von der zweiten elektrischen Energiequelle mit elektrischer Energie versorgt wird.

26. Fahrzeug, insbesondere zum Ankoppeln eines Anhängers ausgebildetes Zugfahrzeug, mit einer elektro-pneumatischen Bremseinrichtung (1) nach wenigstens einem der Ansprüche 10 bis 25.

## Claims

1. Electro-pneumatic structural unit (GSAT) configured and arranged to control an electro-pneumatic brake apparatus (1) in at least two redundancies, a first redundancy and a second redundancy, for an electro-pneumatic service brake apparatus (EBS) of the electro-pneumatic brake apparatus (1) of a motor vehicle designed to tow a trailer, when normal operation of the electro-pneumatic service brake apparatus (EBS), in which a primary service brake pressure is generated by the electro-pneumatic service brake apparatus (EBS), is not possible, wherein the electro-pneumatic structural unit (GSAT) comprises at least the following:
a) at least one first electrical structural unit input connection (19) for introducing an electrical service brake request signal,
b) at least one first pneumatic structural unit output connection (51, 52) for outputting a pneumatic redundancy service brake pressure to at least one pneumatic service brake cylinder (48, 50),
c) at least one second pneumatic structural unit output connection (28.1, 28.2, 28.3) for outputting a pneumatic brake pressure to at least one pneumatic spring-loaded brake cylinder (94),
d) at least one integrated electronic control unit (31) controlled at least by the electrical service brake request signal introduced at the first electrical structural unit input connection (19),
e) a first structural unit apparatus (96) which is controlled by the integrated electronic control unit (31) and which comprises at least one solenoid valve and is connected at least to the first pneumatic structural unit output connection (51, 52),
f) a second structural unit apparatus (66) which is controlled by the electronic control unit (31) and which comprises at least one solenoid valve and is connected to the second structural unit output connection (28.1, 28.2, 28.3), wherein
g) the electronic control unit (31) is configured to:
g1) control the first structural unit apparatus (96), within the scope of the first redundancy, when normal operation of the electro-pneumatic service brake apparatus (EBS) is not possible or is disrupted, on the basis of the electrical service brake request signal introduced at the first electrical structural unit input connection (19), such that the redundancy service brake pressure is output at the first structural unit output connection (51, 52) in order to engage the service brake cylinder (48, 50), and to
g2) control the second structural unit apparatus (66), within the scope of the second redundancy, when normal operation of the electro-pneumatic service brake apparatus (EBS) is not possible and the first redundancy has also failed, on the basis of the electrical service brake request signal introduced at the first electrical structural unit input connection (19), such that the pneumatic brake pressure is output at the second structural unit output connection (28.1, 28.2, 28.3) in order to engage the spring-loaded brake cylinder (94).

2. Electro-pneumatic structural unit (GSAT) according to claim 1, **characterized in that** it comprises at least one second electrical structural unit input connection (25) for introducing an electrical parking brake request signal, wherein the electronic control unit (31) is configured to control the second structural unit apparatus (66), within the scope of a parking brake function, on the basis of the electrical parking brake request signal introduced at the second electrical structural unit input connection (25), in order to output a pneumatic parking brake pressure at the second structural unit output connection (28.1, 28.2, 28.3).

3. Electro-pneumatic structural unit (GSAT) according to claim 1 or 2, **characterized in that** it comprises at least one third electrical structural unit input connection (33) configured to introduce at least one electrical signal into the integrated electronic control unit (31), which signal is at least one of the following electrical signals:
- a wheel-speed-dependent signal representing a wheel speed of at least one wheel of the motor vehicle and/or of the trailer; and/or
- a rotation-rate-dependent signal representing a rotation rate of the motor vehicle and/or of the trailer; and/or
- a steering-angle-dependent signal representing a steering angle or steering-wheel angle of the motor vehicle; and/or
- a longitudinal-acceleration-dependent or lateral-acceleration-dependent signal representing a longitudinal and/or lateral acceleration of the motor vehicle and/or of the trailer.

4. Electro-pneumatic structural unit (GSAT) according to claim 3, **characterized in that** it is configured and arranged to process at least some of the electrical signals received at the third electrical structural unit input connection (33), in particular for regulating vehicle dynamics and/or driving stability.

5. Electro-pneumatic structural unit (GSAT) according to claim 3 or 4, **characterized in that** it has at least one first electrical structural unit output connection (37) for at least one ABS pressure control valve (90, 110).

6. Electro-pneumatic structural unit (GSAT) according to claim 5, **characterized in that** ABS regulation is implemented in the integrated electronic control unit (31), and is configured to output an electrical control signal for the at least one ABS pressure control valve (90, 110) to the first electrical structural unit output connection (37), at least on the basis of at least one electrical signal introduced at the third electrical structural unit input connection (33).

7. Electro-pneumatic structural unit (GSAT) according to claim 6, **characterized in that** the integrated electronic control unit (31) is configured such that at least one of the following regulation processes is performed within the scope of the first redundancy and/or within the scope of the second redundancy:
- ABS regulation; and/or
- ASR regulation; and/or
- ESP regulation.

8. Electro-pneumatic structural unit (GSAT) according to any one of the preceding claims, **characterized in that** it further comprises a third structural unit apparatus (64) having at least one solenoid valve and at least one third pneumatic structural unit output connection (4.2, 21.1, 22.1) connected to the third structural unit apparatus (64), wherein the integrated electronic control unit (31) is configured to control the third structural unit apparatus (64) on the basis of the electrical service brake request signal such that a pneumatic trailer brake pressure for at least one trailer of the motor vehicle is generated at the third pneumatic structural unit output connection (4.2, 21.1, 22.1).

9. Electro-pneumatic structural unit (GSAT) according to any one of the preceding claims, **characterized in that** it includes a fourth structural unit apparatus (8) having at least one solenoid valve, wherein the integrated electronic control unit (31) is configured to perform at least one compressed-air treatment function by controlling the fourth structural unit apparatus (8).

10. Electro-pneumatic structural unit (GSAT) according to claim 9, **characterized in that** it has at least one structural unit reservoir connection (21, 22) connected to the fourth structural unit apparatus (8) for supplying compressed air from at least one compressed air reservoir (4, 6).

11. Electro-pneumatic brake apparatus (1) for a motor vehicle suitable for coupling a trailer, comprising at least the following:
a) the electro-pneumatic structural unit (GSAT) according to any of the preceding claims,
b) the electro-pneumatic service brake apparatus (EBS), which comprises at least the following:
b1) a primary service brake control unit (14),
b2) at least one electro-pneumatic pressure regulation module (16, 36) electrically controlled by the primary service brake control unit (14), and
b3) the at least one service brake cylinder (48, 50), which is connected to a pneumatic pressure regulation module output connection of the pressure regulation module (16, 36), wherein
the primary service brake control unit (14) electrically controls the pressure regulation module (16, 36), on the basis of the electrical service brake request signal, in order to output the primary service brake pressure at the pressure regulation module output connection.

12. Electro-pneumatic brake apparatus according to claim 11, **characterized in that** it has an electro-pneumatic parking brake apparatus which comprises at least the at least one pneumatic spring-loaded brake cylinder (94), which is connected to the second pneumatic structural unit output connection (28.1, 28.2, 28.3), an electrical parking brake actuating apparatus (98), the electronic control unit (31) and the second structural unit apparatus (66) of the electro-pneumatic structural unit (GSAT), wherein the electronic control unit (31) of the electro-pneumatic structural unit (GSAT) controls the second structural unit apparatus (66) of the electro-pneumatic structural unit (GSAT), on the basis of the electrical parking brake request signal generated by the electrical parking brake actuating apparatus (98) and introduced into the second electrical structural unit input connection (25) of the electro-pneumatic structural unit (GSAT), in order to output the pneumatic parking brake pressure to at least one pneumatic spring-loaded brake cylinder (94) at the second pneumatic structural unit output connection (28.1, 28.2, 28.3).

13. Electro-pneumatic brake apparatus according to claim 11 or 12, **characterized in that** it has at least one of the following sensors:
a) at least one wheel speed sensor (56) configured and arranged to generate wheel-speed-dependent signals; and/or
b) at least one rotation rate sensor configured and arranged to generate rotation-rate-dependent signals; and/or
c) at least one steering angle sensor configured and arranged to generate steering-angle-dependent signals; and/or
d) at least one acceleration sensor configured and arranged to generate longitudinal-acceleration-dependent and/or lateral-acceleration-dependent signals.

14. Electro-pneumatic brake apparatus according to claim 13, **characterized in that** the electro-pneumatic structural unit (GSAT) is configured and arranged to directly receive and process the signals from the at least one sensor at the third electrical structural unit input connection (33), wherein:
a) the at least one wheel speed sensor (56) is connected to the third electrical structural unit input connection (33) of the electro-pneumatic structural unit (GSAT); and/or
b) the at least one rotation rate sensor is connected to the third electrical structural unit input connection (33) of the electro-pneumatic structural unit (GSAT); and/or
c) the at least one steering angle sensor is connected to the third electrical structural unit input connection (33) of the electro-pneumatic structural unit (GSAT); and/or
d) the at least one acceleration sensor is connected to the third electrical structural unit input connection (33) of the electro-pneumatic structural unit (GSAT).

15. Electro-pneumatic brake apparatus according to claim 13, **characterized in that** the electro-pneumatic structural unit (GSAT) is configured and arranged to process the signals from the at least one sensor and to receive them indirectly from a further electronic control unit of the motor vehicle, in particular via a data bus to which the electro-pneumatic structural unit (GSAT) and the further electronic control unit are connected.

16. Electro-pneumatic brake apparatus according to any one of claims 10 to 15, **characterized in that** it comprises at least one first ABS pressure control valve (90) arranged between the pressure regulation module output connection of the pressure regulation module (16, 36) and the pneumatic service brake cylinder (48, 50).

17. Electro-pneumatic brake apparatus according to claim 16, **characterized in that** the first ABS pressure control valve (90) is controlled:
a) during normal operation by the primary service brake control unit (14), on the basis of the electrical signal, such that it adapts the primary service brake pressure output at the pressure regulation module output connection for the purpose of brake slip regulation; and
b) within the scope of the first redundancy by the integrated electronic control unit (31), on the basis of the electrical signal, such that it adapts the redundancy service brake pressure for the purpose of brake slip regulation.

18. Electro-pneumatic brake apparatus according to any one of claims 10 to 17, **characterized in that** it comprises, in a pneumatic pressure line (24) between the first structural unit output connection (51, 52) and a pneumatic input of the at least one electro-pneumatic pressure regulation module (16), at least one second ABS pressure control valve (110).

19. Electro-pneumatic brake apparatus according to claim 18, **characterized in that** the second ABS pressure control valve (110) is controlled, within the scope of the first redundancy, by the integrated electronic control unit (31), on the basis of the electrical signal, such that it adapts the redundancy service brake pressure for the purpose of brake slip regulation.

20. Electro-pneumatic brake apparatus according to claim 18 or 19, **characterized in that** the brake coupling head (70) is connected to the third pneumatic structural unit output connection (21.1).

21. Electro-pneumatic brake apparatus according to claim 20, **characterized in that** the electro-pneumatic structural unit (GSAT) is configured and arranged to generate, at the third pneumatic structural unit output connection (21.1), a brake pressure for the trailer which is regulated or controlled with respect to the driving stability and/or vehicle dynamics of the motor vehicle and/or of the trailer.

22. Electro-pneumatic brake apparatus according to any one of claims 10 to 21, **characterized in that** the electro-pneumatic structural unit (GSAT) and, in particular, the integrated electronic control unit (31) of the electro-pneumatic structural unit (GSAT) are configured and arranged such that the pneumatic brake pressure output at the second structural unit output connection (28.1, 28.2, 28.3) is modulated, in particular within the scope of the second redundancy, for the purpose of brake slip regulation.

23. Electro-pneumatic brake apparatus according to any one of claims 10 to 22, **characterized in that** a foot brake module (2) and/or an autopilot apparatus is/are provided and generate(s) the electrical service brake request signal.

24. Electro-pneumatic brake apparatus according to any one of claims 10 to 23, **characterized in that** the integrated electronic control unit (31) monitors the primary service brake control unit (14) and/or the pressure regulation module (16, 36) for faults and activates the first redundancy when a fault is identified.

25. Electro-pneumatic brake apparatus according to any one of claims 10 to 24, **characterized in that** a first electrical energy source is provided which is independent of a second electrical energy source, wherein
a) at least the primary service brake control unit (14) and the pressure regulation module (16, 36) are supplied with electrical energy by the first electrical energy source; and wherein
b) at least the electro-pneumatic structural unit (GSAT) is supplied with electrical energy by the second electrical energy source.

26. Vehicle, in particular a towing vehicle designed to couple with a trailer, having an electro-pneumatic brake apparatus (1) according to at least one of claims 10 to 25.

## Revendications

1. Module électropneumatique (GSAT) qui est conçu et configuré pour, dans au moins deux redondances d'un appareil de freinage de service électropneumatique (EBS) d'un appareil de freinage électropneumatique (1) d'un véhicule automobile conçu pour tracter une remorque, d'une première redondance et d'une deuxième redondance, commander l'appareil de freinage électropneumatique (1) lorsqu'un fonctionnement normal de l'appareil de freinage de service électropneumatique (EBS) n'est pas possible, au cours duquel une pression de freinage de service primaire est générée par l'appareil de freinage de service électropneumatique (EBS), dans lequel le module électropneumatique (GSAT) comprend au moins ce qui suit
a) au moins un premier raccord d'entrée électrique de module (19) destiné à introduire un signal électrique de demande de freinage de service,
b) au moins un premier raccord de sortie pneumatique de module (51, 52) destiné à fournir une pression pneumatique de freinage de service de redondance à au moins un cylindre pneumatique de freinage de service (48, 50),
c) au moins un deuxième raccord pneumatique de sortie de module (28.1, 28.2, 28.3) destiné à fournir une pression pneumatique de freinage à au moins un cylindre pneumatique de freinage à accumulateur à ressort (94),
d) au moins un appareil de commande électronique intégré (31), commandé au moins par le signal électrique de demande de freinage de service appliqué au premier raccord d'entrée électrique de module (19),
e) un premier appareil de module (96) commandé par l'appareil de commande électronique intégré (31), lequel appareil de module comprend au moins une électrovanne et est raccordé au moins au premier raccord de sortie pneumatique de module (51, 52),
f) un deuxième appareil de module (66) commandé par l'appareil de commande électronique (31), lequel appareil de module comprend au moins une électrovanne et est raccordé au deuxième raccord de sortie de module (28.1, 28.2, 28.3), dans lequel
g) l'appareil de commande électronique (31) est conçu pour
g1) dans le cadre de la première redondance, lorsque le fonctionnement normal de l'appareil de freinage de service électropneumatique (EBS) n'est pas possible ou est perturbé, en fonction du signal électrique de demande de freinage de service introduit dans le premier raccord d'entrée de module électrique (19), commander le premier appareil de module (96) de sorte que la pression de freinage de service de redondance est fournie au niveau du premier raccord de sortie de module (51, 52) pour serrer le cylindre de freinage de service (48, 50), et pour
g2) dans le cadre de la deuxième redondance, lorsque le fonctionnement normal de l'appareil de freinage de service électropneumatique (EBS) n'est pas possible et que la première redondance a également échoué, en fonction du signal électrique de demande de freinage de service introduit au niveau du premier raccord d'entrée électrique de module (19), commander le deuxième appareil de commande de module (66) de sorte que la pression de freinage pneumatique soit fournie au niveau du deuxième raccord de sortie de module (28.1, 28.2. 28.3) pour serrer le cylindre de freinage à accumulateur à ressort (94).

2. Module électropneumatique (GSAT) selon la revendication 1, **caractérisé en ce qu'**il comprend au moins un deuxième raccord d'entrée électrique de module (25) pour introduire un signal électrique de demande de freinage de stationnement, dans lequel l'appareil de commande électronique (31) est conçu pour commander le deuxième appareil de module (66) dans le cadre d'une fonction de freinage de stationnement, en fonction du signal électrique de demande de freinage de stationnement introduit au niveau du deuxième raccord d'entrée électrique de module (25) pour fournir une pression pneumatique de freinage de stationnement au niveau du deuxième raccord de sortie de module (28.1, 28.2, 28.3).

3. Module électropneumatique (GSAT) selon la revendication 1 ou 2, **caractérisé en ce qu'**il comprend au moins un troisième raccord d'entrée électrique de module (33), lequel est conçu pour introduire au moins un signal électrique dans l'appareil de commande électronique intégré (31) qui est au moins l'un des signaux électriques suivants :
- un signal dépendant de la vitesse de rotation de roue qui représente une vitesse de rotation de roue d'au moins une roue du véhicule automobile et/ou de la remorque, et/ou
- un signal dépendant de la vitesse de rotation qui représente une vitesse de rotation du véhicule automobile et/ou de la remorque, et/ou
- un signal dépendant de l'angle de braquage qui lequel représente un angle de braquage ou un angle de braquage du volant du véhicule automobile, et/ou
- un signal dépendant de l'accélération longitudinale ou transversale qui représente une accélération longitudinale et/ou transversale du véhicule automobile et/ou de la remorque.

4. Module électropneumatique (GSAT) selon la revendication 3, **caractérisé en ce qu'**il est configuré et conçu pour traiter au moins certains des signaux électriques reçus au niveau du troisième raccord d'entrée électrique de module (33), en particulier dans le sens d'une régulation de la dynamique de conduite et/ou de la stabilité de conduite.

5. Module électropneumatique (GSAT) selon la revendication 3 ou 4, **caractérisé en ce qu'**il présente au moins un premier raccord de sortie électrique de module (37) destiné à au moins une vanne de commande de pression ABS (90, 110).

6. Module électropneumatique (GSAT) selon la revendication 5, **caractérisé en ce qu'**une régulation ABS est mise en œuvre dans l'appareil de commande électronique intégré (31), régulation qui est conçue pour fournir un signal de commande électrique pour l'au moins une vanne de régulation de pression ABS (90, 110) au niveau du troisième raccord d'entrée électrique de module (33) en fonction au moins d'un signal électrique introduit au niveau du premier raccord de sortie électrique de module (37).

7. Module électropneumatique (GSAT) selon la revendication 6, **caractérisé en ce que** l'unité de commande électronique intégrée (31) est conçue de sorte qu'au moins une régulation parmi les régulations suivantes est exécutée dans le cadre de la première redondance et/ou dans le cadre de la deuxième redondance :
- une régulation ABS, et/ou
- une régulation ASR, et/ou
- une régulation ESP.

8. Module électropneumatique (GSAT) selon l'une quelconque des revendications précédentes, **caractérisé en ce qu'**il comprend en outre un troisième appareil de module (64) avec au moins une électrovanne ainsi qu'au moins un troisième raccord de sortie pneumatique de module (4.2, 21.1, 22.1) raccordé au troisième appareil de module (64), dans lequel l'appareil de commande électronique intégré (31) est conçu pour commander le troisième appareil de module (64) en fonction du signal électrique de demande de freinage de service, de sorte qu'une pression de freinage pneumatique de remorque est générée au niveau du troisième raccord de sortie pneumatique de module (4.2, 21.1, 22.1) pour au moins une remorque du véhicule automobile.

9. Module électropneumatique (GSAT) selon l'une quelconque des revendications précédentes, **caractérisé en ce qu'**il comprend un quatrième appareil (8) de module avec au moins une électrovanne, dans lequel l'appareil de commande électronique intégré (31) est conçu pour exécuter au moins une fonction de traitement d'air comprimé en commandant le quatrième appareil de module (8).

10. Module électropneumatique (GSAT) selon la revendication 9, **caractérisé en ce qu'**il présente au moins un raccord de réservoir de module (21, 22) connecté au quatrième appareil de module (8) pour l'alimentation en air comprimé à partir d'au moins un réservoir d'air comprimé (4, 6),

11. Appareil de freinage électropneumatique (1) pour un véhicule automobile qui est adapté pour atteler une remorque, lequel comprend au moins ce qui suit :
a) le module électropneumatique (GSAT) selon l'une quelconque des revendications précédentes,
b) l'appareil de freinage de service électropneumatique (EBS) qui comprend au moins ce qui suit :
b1) un appareil de commande de freinage de service primaire (14),
b2) au moins un module de régulation de pression électropneumatique (16, 36) commandé électriquement par l'appareil de commande de freinage de service primaire (14), et
b3) au moins un cylindre de freinage de service (48, 50) qui est raccordé à un raccord de sortie pneumatique de module de régulation de pression (16, 36), dans lequel
le module de commande de freinage de service primaire (14) commande électriquement le module de régulation de pression (16, 36) en fonction du signal électrique de demande de freinage de service pour réguler la pression de freinage de service primaire au niveau du raccord de sortie de module de régulation de pression.

12. Appareil de freinage électropneumatique selon la revendication 11, **caractérisé en ce qu'**il présente un appareil de freinage de stationnement électropneumatique qui comprend au moins l'au moins un cylindre de freinage pneumatique à accumulateur à ressort (94), qui est raccordé au deuxième raccord de sortie de module pneumatique (28.1, 28.2, 28.3), et un appareil électrique d'actionnement de freinage de stationnement (98), l'appareil de commande électronique (31) et le deuxième appareil de module (66) du module électropneumatique (GSAT), dans lequel l'appareil de commande électronique (31) du module électropneumatique (GSAT) commande le deuxième appareil de module (66) du module électropneumatique (GSAT) en fonction du signal électrique de demande de freinage de stationnement généré par l'appareil électrique d'actionnement de freinage de stationnement (98) et introduit dans le deuxième raccord d'entrée électrique de module (25) du module électropneumatique (GSAT) afin de fournir la pression de frein de stationnement pneumatique à au moins un cylindre de frein pneumatique à accumulateur à ressort (94) au niveau du deuxième raccord de sortie pneumatique de module (28.1, 28.2, 28.3).

13. Appareil de freinage électropneumatique selon la revendication 11 ou 12, **caractérisé en ce qu'**il présente au moins l'un des capteurs suivants :
a) au moins un capteur de vitesse de rotation de roue (56) qui est conçu et configuré pour générer des signaux dépendant de la vitesse de roue, et/ou
b) au moins un capteur de vitesse de rotation qui est conçu et configuré pour générer des signaux dépendant de la vitesse de rotation, et/ou
c) au moins un capteur d'angle de braquage qui est conçu et configuré pour générer des signaux dépendant de l'angle de braquage, et/ou
d) au moins un capteur d'accélération qui est conçu et configuré pour générer des signaux dépendant de l'accélération longitudinale et/ou transversale.

14. Appareil de freinage électropneumatique selon la revendication 13, **caractérisé en ce que** le module électropneumatique (GSAT) est conçu et configuré pour recevoir et traiter directement les signaux de l'au moins un capteur au niveau du troisième raccord d'entrée électrique de module (33), dans lequel
a) l'au moins un capteur de vitesse de rotation de roue (56) est raccordé au troisième raccord d'entrée électrique de module (33) du module électropneumatique (GSAT), et/ou
b) l'au moins un capteur de vitesse de rotation est raccordé au troisième raccord d'entrée de module (33) du module électropneumatique (GSAT), et/ou
c) l'au moins un capteur d'angle de braquage est raccordé au troisième raccord d'entrée de module (33) du module électropneumatique (GSAT), et/ou
d) l'au moins un capteur d'accélération est raccordé au troisième raccord d'entrée électrique de module (33) du module électropneumatique (GSAT).

15. Appareil de freinage électropneumatique selon la revendication 13, **caractérisé en ce que** le module électropneumatique (GSAT) est conçu et configuré pour traiter les signaux de l'au moins un capteur et les recevoir indirectement d'un appareil de commande électronique supplémentaire du véhicule automobile, en particulier par l'intermédiaire d'un bus de données auquel le module électropneumatique (GSAT) et l'appareil de commande électronique supplémentaire sont raccordés.

16. Appareil de freinage électropneumatique selon l'une quelconque des revendications 10 à 15, **caractérisé en ce qu'**il comprend au moins une première vanne de commande de pression ABS (90) intercalée entre le raccord de sortie de module de régulation de pression (16, 36) et le cylindre pneumatique de freinage de service (48, 50).

17. Appareil de freinage électropneumatique selon la revendication 16, **caractérisé en ce que** la première vanne de commande de pression ABS (90)
a) en fonctionnement normal, est commandée par l'appareil de commande de freinage de service primaire (14) en fonction du signal électrique, de sorte qu'elle adapte la pression de freinage de service primaire fournie au raccord de sortie de module de régulation de pression dans le but de réguler le glissement au freinage, et
b) dans le cadre de la première redondance, est commandée par l'appareil de commande électronique intégré (31) en fonction du signal électrique, de sorte qu'elle adapte la pression de freinage de service de redondance dans le but de réguler le glissement au freinage.

18. Appareil de freinage électropneumatique selon l'une quelconque des revendications 10 à 17, **caractérisé en ce qu'**il comprend, dans une conduite de pression pneumatique (24) entre le premier raccord de sortie de module (51, 52) et une entrée pneumatique de l'au moins un module électropneumatique de régulation de pression (16), au moins une deuxième vanne de commande de pression ABS (110).

19. Appareil de freinage électropneumatique selon la revendication 18, **caractérisé en ce que** la deuxième vanne de commande de pression ABS (110) est commandée, dans le cadre de la première redondance, est commandée par l'appareil de commande électronique intégré (31) en fonction du signal électrique, de sorte qu'elle adapte la pression de freinage de service de redondance dans le but de réguler le glissement au freinage.

20. Appareil de freinage électropneumatique selon la revendication 18 ou 19, **caractérisé en ce que** la tête d'accouplement « Frein » (70) est raccordée au troisième raccord de sortie pneumatique de module (21.1).

21. Appareil de freinage électropneumatique selon la revendication 20, **caractérisé en ce que** le module électropneumatique (GSAT) est conçu et configuré pour générer, au niveau du troisième raccord de sortie pneumatique de module (21.1), une pression de freinage pour la remorque, pression qui est régulée ou commandée par rapport à la stabilité de conduite et/ou la dynamique de conduite du véhicule automobile et/ou de la remorque.

22. Appareil de freinage électropneumatique selon l'une quelconque des revendications 10 à 21, **caractérisé en ce que** le module électropneumatique (GSAT) et en particulier l'appareil de commande électronique intégré (31) du module électropneumatique (GSAT) sont conçus et configurés de sorte que la pression de freinage pneumatique fournie au niveau du deuxième raccord de sortie de module (28.1, 28.2, 28.3) est modulée, en particulier dans le cadre de la deuxième redondance dans le but de réguler le glissement au freinage.

23. Appareil de freinage électropneumatique selon l'une quelconque des revendications 10 à 22, **caractérisé en ce qu'**un module de pédale de frein (2) et/ou un appareil de pilotage automatique qui génère le signal électrique de demande de freinage de service est prévu.

24. Appareil de freinage électropneumatique selon l'une quelconque des revendications 10 à 23, **caractérisé en ce que** l'appareil de commande électronique intégré (31) surveille l'appareil de commande de freinage de service primaire (14) et/ou le module de régulation de pression (16, 36) à la recherche de défauts et active la première redondance si un défaut est constaté.

25. Appareil de freinage électropneumatique selon l'une quelconque des revendications 10 à 24, **caractérisé en ce qu'**une première source d'énergie électrique qui est indépendante d'une deuxième source d'énergie électrique est prévue, dans lequel
a) au moins l'appareil de commande de freinage de service primaire (14) et le module de régulation de pression (16, 36) sont alimentés en énergie électrique par la première source d'énergie électrique, et
b) au moins le module électropneumatique (GSAT) est alimenté en énergie électrique par la deuxième source d'énergie électrique.

26. Véhicule, en particulier véhicule tracteur conçu pour l'attelage d'une remorque, avec un appareil de freinage électropneumatique (1) selon au moins l'une quelconque des revendications 10 à 25.
